Europäisches Patentamt

**European Patent Office**

Office européen des brevets

(11) Numéro de publication: **0 119 374**
**B1**

(12) **FASCICULE DE BREVET EUROPEEN**

(45) Date de publication du fascicule du brevet: **02.09.87**

(21) Numéro de dépôt: **83870025.0**

(22) Date de dépôt: **18.03.83**

(51) Int. Cl.⁴: **H 02 P 7/62**

(54) **Procédé pour le contrôle de la marche d'une machine électrique et dispositif appliquant ce procédé.**

(43) Date de publication de la demande:
**26.09.84 Bulletin 84/39**

(45) Mention de la délivrance du brevet:
**02.09.87 Bulletin 87/36**

(84) Etats contractants désignés:
**AT BE CH DE FR GB IT LI LU NL SE**

(56) Documents cités:
**DE-A-2 914 595**
**FR-A-1 570 192**
**FR-A-2 026 121**
**FR-A-2 060 101**
**FR-A-2 132 631**

**Patent Abstracts of Japan Vol. 6, no 176, 10 septembre 1982**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(72) Inventeur: **Denoncin, Lucien**
**Rue des Merles 13**
**B-6418 Gozee (BE)**

Courier Press, Leamington Spa, England.

EP 0 119 374 B1

## Description

La présente invention s'applique aux entraînements à vitesse variable de machines alternatives polyphasées, en particulier celles alimentées par des convertisseurs statiques de fréquence, et concerne plus particulièrement un procédé destiné à contrôler la grandeur et la fréquence du courant statorique et des dispositifs appliquant ce procédé.

De tels dispositifs comprennent généralement deux convertisseurs. Le premier convertisseur génère une tension continue de valeur réglable à partir de tensions alternatives d'amplitudes non réglables ou à partir d'une tension continue de valeur non réglable. Le second convertisseur connecté au premier à travers une inductance de lissage alimente la machine à fréquence variable.

Le premier convertisseur est commandé de façon à injecter un courant d'amplitude imposée dans l'inductance de lissage et dans le second convertisseur et par là-même, dans les phases de la machine trandis que le second convertisseur commute le courant successivement d'une phase à l'autre de la machine à la fréquence imposée.

Pour assurer la stabilité du dispositif, il est parfois recommandé de calculer la fréquence du second convertisseur de sorte que l'on impose un déphase déterminé entre l'onde tournante de force magnétomotrice représentée par le vecteur courant statorique et l'onde tournante du flux dans la machine. Le brevet FR 2132631 décrit un dispositif destiné à commander le couple d'une machine alternative polyphasée en utilisant des boucles de régulation qui règlent le module du vecteur courant, le module du vecteur flux et l'angle entre ces deux vecteurs. En pratique cette technique aboutit à des dispositifs de contrôle compliqués qui nécessitent la mise en place de capteurs de courant dans les phases du moteur et perdent leur efficacité lorsque le courant injecté dans les phases de la machine s'annule comme par exemple en conduction intermittente, phénomène apparaissant par exemple lorsque le premier convertisseur est un convertisseur de tensions alternatives en tension continue et que la machine tourne à faible vitesse.

Ces inconvénients sont évités par le procédé revendiqué selon l'invention dans lequel la génération des ordres d'allumage des semi-conducteurs du second convertisseur consiste à imposer le moment d'allumage en tenant compte de la position instantanée des ondes tournantes de la machine.

L'invention telle qu'elle est caractérisée dans les revendications consiste en un procédé de commande d'une ou de plusieurs machines alternatives alimentées par un ensemble convertisseur constitué d'au moins un convertisseur de fréquence, le dispositif comprenant une boucle de régulation de l'amplitude du courant, un dispositif de mesure pour repérer le vectreur du flux d'entrefer, une boucle de régulation de la phase d'un vecteur d'allumage des thyristors de l'onduleur commandant le moment d'allumage des thyristors et réagissant à une consigne représentative du déphasage désiré entre le vecteur du courant et le vecteur du flux d'entrefer de la machine, cette consigne étant modifiée par une boucle de réaction pour tenir compte du déphasage entre le vecteur d'allumage et le vecteur du courant; caractérisé en ce que la dite consigne représentative du déphasage désiré entre le vecteur du courant et le vecteur du flux d'entrefer est combinée avec un signal de correction émanant d'un régulateur d'amplitude du flux d'entrefer pour donner un signal de commande.

A partir de l'état des semi-conducteurs, les composantes d'un vecteur appelé par la suite vecteur d'allumage, sont déterminées dans un repère fixe par rapport au stator de la machine. Dans ce même repère les composantes du champ tournant sont également déterminées pour calculer le déphasage entre le vecteur d'allumage et le champ tournant. L'allumage des semi-conducteurs du second convertisseur est alors commandé pour que le déphasage calculé corresponde au déphasage imposé par un générateur de consigne ou par tour autre régulateur. Ce procédé de grande simplicité de réalisation permet indépendamment de la fréquence fondamentale d'alimentation de la machine de modifier quasi instantanément le déphase entre le vecteur d'allumage et le champ tournant et, par conséquent, permet un contrôle très performant de la machine dans une plage de fréquence très étendue.

Le contrôle du champ tournant du moteur et du couple sont réalisés au moyen de dispositifs appropriés en réglant d'une part la valeur du courant injecté dans les phases de la machine par le réglage de la tension continue présente aux bornes du premier convertisseur et en réglant d'autre part la valeur de l'angle de déphasage désiré à l'entrée du dispositif de contrôle de l'allumage des semi-conducteurs du second convertisseur. Ces dispositifs feront l'objet d'une description plus détaillée dans la suite.

Ce procédé de contrôle de couple est applicable à toute machine électrique polyphasée. L'exemple, repris ci-après, traite une application du procédé dans le cas d'un moteur triphasé asynchrone, alimenté par l'intermédiaire d'un circuit comportant un redresseur à thyristors, une self de lissage et un onduleur.

Ce procédé est basé sur la mesure et le réglage du déphasage existant entre un premier vecteur $\psi$ représentant le flux magnétique dans l'entrefer du moteur et un second vecteur $\theta$ représentant les ordres d'allumage de thyristors de l'onduleur. Puisque le procédé ne se réfère pas à la connaissance du vecteur i représentant le courant fourni au stator du moteur, il est possible d'assurer le contrôle de la machine, sans disposition de mesure du courant des phases de la machine. Ce procédé permet également d'assurer un contrôle correct de la machine en cas d'annulation temporaire du courant dans la self de lissage.

L'invention revendiquée est détaillée à l'aide des figures suivants.

La figure 1 représente les différentes vecteurs considérés dans un premier système d'axes de référence.

**0 119 374**

La figure 2 montre la fonction utilisée dans le dispositif.

La figure 3 expose le schéma d'ensemble du dispositif donné à titre d'exemple de réalisation.

La figure 4 donne les détails d'un élément repris dans le séchma d'ensemble.

La figure 5 expose des diagrammes relatifs aux moteurs asynchrones.

La figure 6 représente dans un second système d'axes les différentes vecteurs lors d'une accélération en configuration de traction.

La figure 7 fait apparaître les différents modes de déplacement de certains vecteurs.

La figure 8 montre le comportement des différentes vecteurs lors d'un passage d'une configuration de traction à une configuration de freinage.

La figure 9 donne l'évolution du flux en fonction de l'angle et à courant constant dans un moteur asynchrone.

La figure 10 montre le comportement des différents vecteurs pour deux moteurs asynchrones fonctionnant en parallèle.

La figure 11 montre un couple de la machine alimentée en ondes pleines.

La figure 12 correspond à un couple de la machine alimentée en ondes découpées.

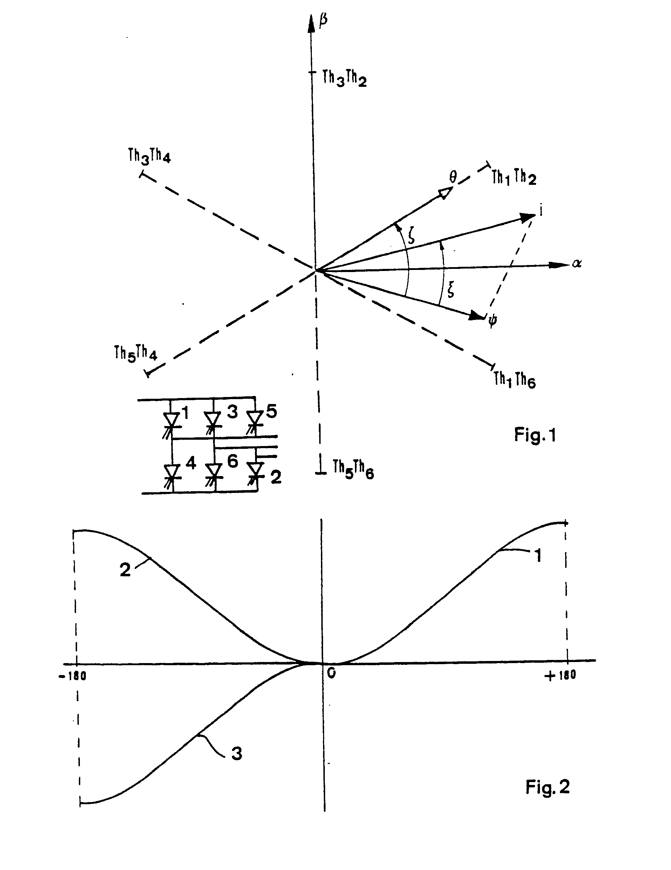

La figure 1 montre un système de référence constitué d'axes orthogonaux occupant une position fixe par rapport au stator d'un moteur asynchrone triphasé pris comme exemple d'application du procédé revendiqué. Par simplification, ou transforme le système triphasé en un système équivalent biphasé rapporté à deux axes orthogonaux.

L'axe horizontal $\alpha$ coïncide avec l'axe magnétique de la première phase, l'axe $\beta$ est orthogonal au premier.

Dans ce système sont portés: un vecteur i représentant le courant statorique du moteur, un vecteur $\psi$ représentant le flux dans l'entrefer et un vecteur normé $\theta$ appelé vecteur d'allumage et dont la position correspond à une configuration particulière de l'onduleur. A ce système d'axes de référence $\alpha$ et $\beta$ se superpose un réseau de traits de repérage, fixes dans l'espace, ayant même origine, décalés l'un part rapport à l'autre de 60° et dont l'un est en coïncidence avec l'axe de référence $\beta$. Ces six traits de repérages indiquent les différentes configurations de l'onduleur selon les ordres d'allumage donnés aux thyristors $Th_i$. Dans ce système de référence, le vecteur $\psi$ représente le flux dans l'entrefer du moteur, il tourne dans le sens antihorlogique en synchronisme avec les champs statoriques; il tourne donc à la vitesse angulaire correspondant à la fréquence fondamentale d'excitation du stator. Le vecteur $\theta$, appelé vecteur d'allumage, représente l'ordre d'allumage donné à une paire de thyristors de l'onduleur. Dans le cas d'un moteur triphasé, ce vecteur progresse par bonds de 60° sautant ainsi d'un trait de repérage à un autre trait de repérage dans le sens antihorlogique.

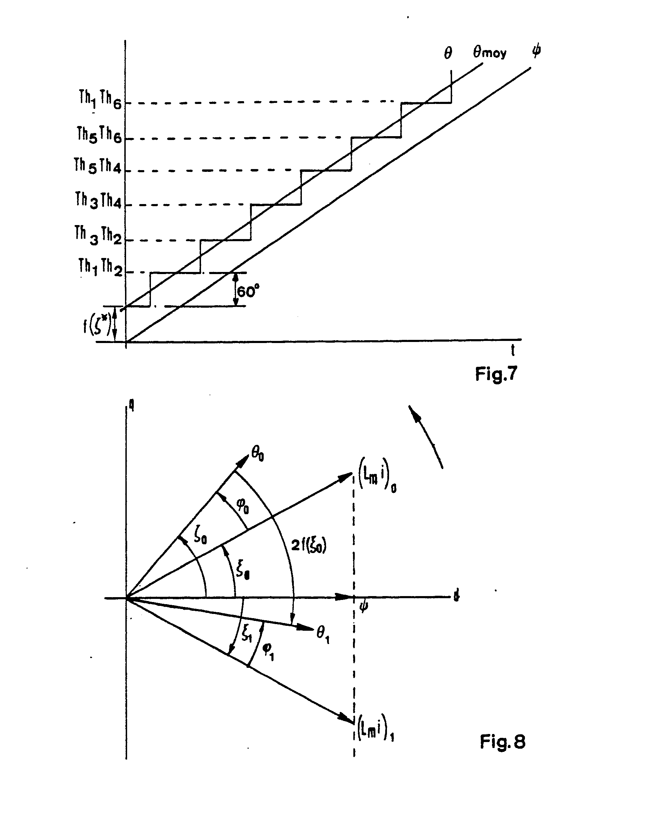

On peut comparer la progression respective des vecteurs $\psi$ et $\theta$ en se référant à la figure 7.

Dans cette figure on constate que le vecteur $\psi$ se déplace à vitesse constante. C'est le cas lorsque la machine est en régime stabilisé.

Quant au vecteur $\theta$, il se déplace instantément d'un trait de repérage à un autre trait de repérage selon la succession indiquée à la figure 7. Le vecteur i représente le courant stator du moteur. C'est un vecteur résultant produisant exactement les mêmes champs magnétiques que les courants triphasés réels.

Tout comme le vecteur $\theta$ qui déclenche le passage du courant dans les thyristors, le vecteur i progresse également par bonds de 60°, dans le cas d'un moteur triphasé. Lorsque la vitesse du rotor est faible, on peut considérer que le vecteur i coïncide avec le vecteur $\theta$, mais au fur et à mesure que la vitesse s'accroît, le déphasage entre l'ordre d'allumage reçu à la gachette d'un thyristor et l'instant où le courant s'établit dans les phases du moteur augmente de plus en plus. A grande vitesse, il apparaît, entre le vecteur $\theta$ et le vecteur i, un déphasage pouvant même dépasser 60°.

L'angle $\zeta$ repère le déphasage entre le vecteur d'allumage $\theta$ et le vecteur flux $\psi$.

L'angle $\xi$ repère le déphasage entre le vecteur courant i et le vecteur flux $\psi$.

La figure 1 est relative à un moteur asynchrone triphasé en configuration de traction tournant à une vitesse suffisante pour qu'un déphasage se remarque entre le vecteur d'allumage $\theta$ et le vecteur courant i.

Puisque le principe du procédé revendiqué est basé sur le contrôle du moteur par l'intermédiaire de l'angle $\zeta$ donnant le déphasage entre le vecteur d'allumage $\theta$ et le vecteur flux $\psi$, il faut établir une fonction caractéristique de l'angle $\zeta$ tenant compte du déphasage possible entre l'allumage d'un thyristor et le transfert de courant.

La function $f(\zeta)$ considérée dans cet exemple s'étale entre des angles compris entre $-180°$ et $+180°$.

La valeur modulaire de cette fonction s'exprime par

$$\frac{1-\cos \zeta}{2}$$

Puisque $\zeta$ est l'angle de déphasage entre les vecteur $\theta$ et $\psi$ nous allons exprimer $f(\zeta)$ par rapport aux paramètres $\theta$ et $\psi$.

Soit l'expression exponentielle imaginaire du vecteur normé

3

**0 119 374**

$$\theta = e^{j(\omega_1 t + \varphi_\theta)} \tag{1}$$

avec

$\omega_1$: pulsation statorique

$\varphi_\theta$: déphasage du vecteur par rapport à l'origine des phases.

L'expression exponentielle imaginaire du vecteur $\psi$ ramené à sa valeur unitaire sera

$$\frac{\psi}{|\psi|} = e^{j(\omega_1 t + \varphi_\psi)} \tag{2}$$

$\varphi_\psi$: déphasage du vecteur par rapport à l'origine des phases.

Le produit de l'équation (1) par l'expression conjuguée de l'équation (2) traduit le déphasage $\zeta$ entre les deux vecteurs unitaires $\theta$ et

$$\frac{\psi}{|\psi|}$$

et s'exprime par

$$\theta \frac{\psi^*}{|\psi|} = e^{j(\varphi_\theta - \varphi_\psi)} = \cos(\varphi_\theta - \varphi_\psi) + j \sin(\varphi_\theta - \varphi_\psi) \tag{3}$$

Nous considérons successivement la partie réelle et la partie imaginaire de l'expression (3) pour les exprimer en fonction des projections des vecteur $\theta$ et $\psi$ sur les axes de référence $\alpha$ et $\beta$ soit

$$Re\{\theta(\frac{\psi}{|\psi|})^*\} = Re\{(\theta_\alpha + j\theta_\beta)(\frac{\psi_\alpha}{|\psi|} - j\frac{\psi_\beta}{|\psi|})\} = \theta_\alpha \frac{\psi_\alpha}{|\psi|} + \theta_\beta \frac{\psi_\beta}{|\psi|} \tag{4}$$

et

$$Tm\{\theta(\frac{\psi}{|\psi|})^*\} = \theta_\beta \frac{\psi_\alpha}{|\psi|} - \theta_\alpha \frac{\psi_\beta}{|\psi|} \tag{5}$$

avec $|\psi| = \sqrt{\psi_\alpha^2 + \theta_\beta^2}$ et nous pouvons écrire

$$\cos \zeta = \theta_\alpha \frac{\psi_\alpha}{|\psi|} + \theta_\beta \frac{\psi_\beta}{|\psi|} \tag{6}$$

et

$$\sin \zeta = \theta_\beta \frac{\psi_\alpha}{|\psi|} - \theta_\alpha \frac{\psi_\beta}{|\psi|} \tag{7}$$

La fonction

$$\frac{1 - \cos \zeta}{2}$$

est symétrique par rapport à l'origine des angles $\zeta$. Telle quelle, elle ne peut donc convenir pour couvrir sans ambiguïté les angles $-180°$ à $+180°$. Elle est représentée par les branches 1 et 2 de la figure 2. Par contre si nous affectons la fonction

$$\frac{1 - \cos \zeta}{2}$$

du signe de sin $\zeta$ pour les angles correspondants, nous obtenons une fonction univoque pour des valeurs de l'angle $\zeta$ comprise entre $-180°$ à $+180°$ représentée par les branches 1 et 3 de la figure 2.

4

La fonction considérée dans cet exemple sera donc

$$f(\zeta) = \text{signe du } \sin \zeta \times \frac{1-\cos \zeta}{2} \qquad (8)$$

A l'aide des équations (6) et (7) la fonction $f(\zeta)$ peut s'exprimer à l'aide de valeurs connues. En effet, les valeur $\psi_\alpha$ et $\psi_\beta$, respectivement les projections du flux d'entrefer $\psi$ sur les axes de référence $\alpha$ et $\beta$, sont connues par des moyens de mesure appropriés. Quant aux valeurs $\theta_\alpha$ et $\theta_\beta$, respectivement les projections du vecteur d'allumage $\theta$ sur les axes de référence $\alpha$ et $\beta$, ce sont des valeurs discrètes reprises dans un tableau qui sera présenté ultérieurement.

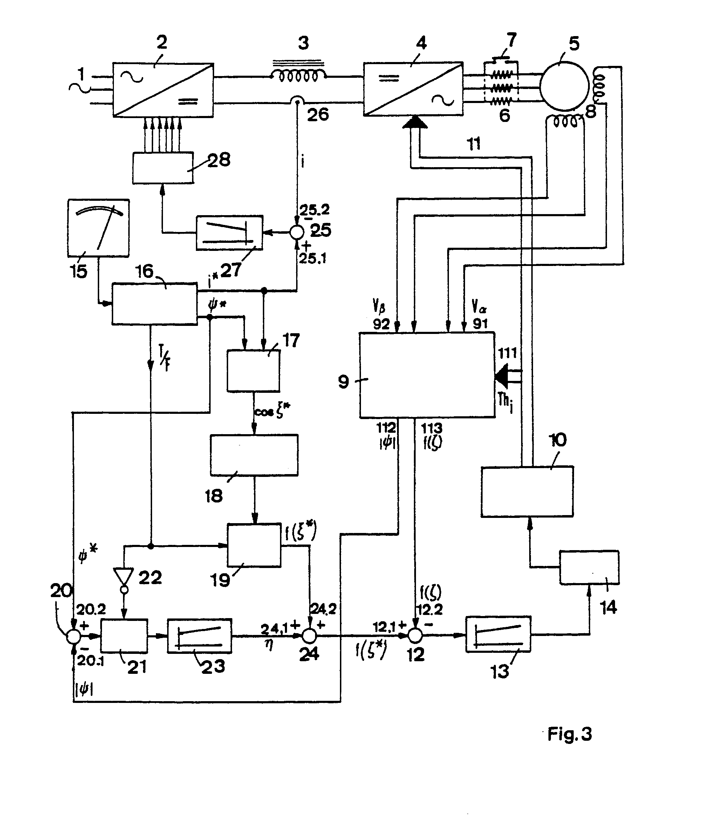

La figure 3 montre un schéma d'ensemble d'un exemple de réalisation du dispositif de contrôle mettant en application le procédé revendiqué.

Un réseau triphasé 1 alimente un redresseur 2 qui par l'intermédiaire d'une self de lissage 3 est connecté à un onduleur 4 qui alimente un moteur asynchrone triphasé 5. Entre le moteur asynchrone 5 et l'onduleur 4 sont disposées des résistances de freinage 6 qui peuvent être court-circuitées par un dispositif approprié 7. Une unité de mesure 8 est connectée à un calculateur d'état de la machine 9. Ce calculateur d'état de la machine 9, qui sera détaillé ultérieurement, reçoit par des bornes d'entrée 91 et 92 les tensions $V_\alpha$ et $V_\beta$ relevées, par l'unité de mesure 8, aux bornes des bobines de mesure des composantes symétriques du flux. Remarquons que ces tensions $V_\alpha$ et $V_\beta$ peuvent être obtenues à partir de la mesure des tensions aux borne du moteur (5). Par une autre borne d'entrée 111, le calculateur d'état de la machine 9 reçoit également des ordres logiques d'allumage des thyristors $Th_I$ venant d'un décodeur 10 qui commande l'allumage des thyristors de l'onduleur 4 par l'intermédiaire du bus de commande 11.

Le calculateur d'état de la machine 9 fournit à une borne de sortie 112 la valeur modulaire du flux réel de la machine $|\psi|$ et à une borne de sortie 113 la fonction $f(\zeta)$ représentant le signal de contrôle. Ce signal de contrôle $f(\zeta)$ est transmis à un comparateur 12 par une borne d'entrée 12.2 alors qu'un autre signal $f(\zeta^*)$ appelé signal de commande est reçu à une autre borne d'entrée 12.1. Le rôle du comparateur 12 sera d'établir la comparaison entre le signal de contrôle $f(\zeta)$ et le signal de commande $f(\zeta^*)$. Ce signal de commande $f(\zeta^*)$ peut être issu d'un générateur de consigne qui sera détaillé ultérieurement ou plus simplement d'un potentiomètre. Si un écart est constaté entre ces deux valeurs le comparateur 12 transmet un signal d'erreur $\varepsilon$ à un régulateur de phase 13. Ce régulateur de phase 13 possède des caractéristiques de transfert à la fois proportionnelles et intégrales. Si ce régulateur de phase 13 constate à sa borne d'entrée une erreur il affichera à la borne de sortie une tension proportionnelle à $K_1\varepsilon + K_2\int \varepsilon dt$. Le régulateur de phase 13 produit un signal de sortie sous forme d'une tension qui varie en fonction de l'écart constaté par le comparateur 12 et qui est transmise à un convertisseur de tension en fréquence 14. Le rôle de ce convertisseur de tension en fréquence 14 sera de fournir à sa borne de sortie des impulsions dont la fréquence sera proportionnelle à la tension reçue à sa borne d'entrée. Par exemple, si l'écart constaté par le comparateur 12 entre le signal de contrôle $f(\zeta)$ et le signal de commande $f(\zeta^*)$ est positif, la fréquence des impulsions transmises à la sortie du convertisseur de tension en fréquence 14 sera plus élevée. Les impulsions fournies par le convertisseur de tension en fréquence 14 parviennent au décodeur 10 qui fait également office de compteur et de diviseur par six. Son rôle est donc de mettre en forme convenable les impulsions reçues pour fournir des ordres logiques qu'il transmet à la fois au calculateur d'état de la machine 9 et à l'onduleur 4.

A ce stade de la description du dispositif appliquant le procédé revendiqué, on peut envisager une explication du fonctionnement des éléments déjà mentionnés. Ces différents éléments, à savoir le calculateur d'état de la machine 9, le comparateur 12, le régulateur de phase 13, le convertisseur de tension en fréquence 14 et le décodeur 10, forment la boucle de verrouillage de phase du dispositif. En réalité, l'élément 10, appelé décodeur est constitué d'un compteur réversible en anneau et diviseur par six alimenté par des impulsions provenant du convertisseur de tension en fréquence 14. Selon que le compteur du décodeur 10 est programmé dans le sens croissant ou décroissant, ce compteur passe, à chaque impulsion reçue, de l'état initial à l'état suivant dans le sens croissant ou décroissant.

Si nous convenons d'appeler $E_1$, $E_2$, $E_3$, $E_4$, $E_5$ et $E_6$ les états successifs du compteur et si, par exemple, nous considérons que l'état initial est $E_3$, au moment où le décodeur 10 reçoit une impulsion du convertisseur de tension en fréquence 14, le compteur passers à l'état $E_4$ s'il est programmé dans le sens croissant, et passers à l'état $E_2$ s'il est programmé dans le sens décroissant.

De plus le décodeur 10 transforme les signaux d'état du compteur en signaux d'allumage des thyristors du convertisseur 4 selon la table de correspondance suivante:

| Etat du compteur | Signaux d'allumage |
|---|---|
| $E_1$ | $Th_1$, $Th_2$ |
| $E_2$ | $Th_3$, $Th_2$ |
| $E_3$ | $Th_3$, $Th_4$ |
| $E_4$ | $Th_5$, $Th_4$ |
| $E_5$ | $Th_5$, $Th_6$ |
| $E_6$ | $Th_1$, $Th_6$ |

Le signal logique de programmation du sens de comptage est également fourni par le convertisseur de tension en fréquence 14.

Considérons que le moteur 5 tourne à une vitesse suffisante pour que les temps de commutation des thyristors de l'onduleur 4 soient devenus suffisamment longs pour que, dans la figure 1, le vecteur courant i ait pris du retard par rapport au vecteur d'allumage θ.

Le moteur 5 étant supposé tourner à vitesse stabilisée nous avons le signal de commande $f(\zeta^*)$ et le signal de contrôle $f(\zeta)$ qui sont égaux, en moyenne.

Dès que l'opérateur demande un changement de régime dans la marche du moteur 5, il se présente à la borne d'entrée 12.1 du comparateur 12 un nouveau signal de commande $f(\zeta_1^*)$ différent du précédent $f(\zeta_0^*)$.

Soit par exemple $f(\zeta_1^*) < f(\zeta_0^*)$ ce qui correspond à un ordre de réduction du couple du moteur 5.

Dans un premier temps le signal de contrôle $f(\zeta)$ reste à sa valeur initiale $f(\zeta_0)$ et le comparateur 12 constate un écart moyen négatif puisque $f(\zeta_1^*) - f(\zeta_0) < o$. Cet écart moyen négatif est transmis au régulateur de phase 13 dont la tension de sortie se réduit, provoquant dans le convertisseur de tension en fréquence 14 une réduction de la fréquence des impulsions. Après mise en forme dans le décodeur 10, cette réduction de fréquence d'impulsions est transformée en réduction de la vitesse de balayage des thyristors de l'onduleur 4 qui à son tour va amener le moteur à réduire son couple. En effet les équations du moteur asynchrone s'écrivent

$$|\psi| = L_m i \cos \xi \qquad (9)$$

$$\tau = \frac{3}{2} |\psi| i \sin \xi \qquad (10)$$

$L_m$: inductance mutelle
$\tau$: couple
$\xi$: déphasage entre i et $\psi$

Si on suppose que le moteur travaille à flux constant, la réduction du couple s'obtiendra par une réduction du courant et une réduction de l'angle $\xi$.

Cela se traduit dans la figure 1 par un rapprochement des vecteurs i et $\psi$. Si en première approximation, nous considérons que les retards de commutation de thyristors n'ont pas évolués, en d'autres termes que le déphasage entre le vecteur courant i et le vecteur d'allumage θ n'a pas changé, la réduction de l'angle $\xi$ sera accompagnée d'une même réduction de l'angle $\zeta$. De ce fait, la fonction $f(\zeta)$, c'est-à-dire le signal de contrôle, va diminuer. Nous aurons donc $f(\zeta_1) < f(\zeta_0)$. A cet instant le comparateur 12 aura donc à la borne 12.1 un signal de commande $f(\zeta_1^*)$ qui n'aura plus évolué et à la borne 12.2 un signal de contrôle $f(\zeta_1)$ dont la valeur aura augmenté. En conséquence, l'écart moyen négatif initialement constaté par le comparateur 12 va progressivement se réduire jusqu'à annulation finale.

Il existe différents moyens pour obtenir le signal de commande $f(\zeta^*)$. Le plus simple est d'utiliser une source de tension variable sur commande de l'opérateur. Une autre solution serait d'émettre ce signal de contrôle au départ d'un générateur de consignes.

Dans la solution exposée dans la figure 3, le schéma fait appel à la fois à un générateur de consignes et à une boucle de réaction pour obtenir le signal de commande $f(\zeta^*)$. Un poste de commande 15 transmet ses ordres à un générateur de consignes 16 qui par des moyens connus fournit à une borne de sortie le signal i* représentant la nouvelle valeur demandée pour le courant alimentant l'onduleur 4 et à une autre borne de sortie le signal $\psi^*$ représentant la nouvelle valeur pour le flux dans l'entrefer du moteur 5. A l'entrée du générateur de consigne 16 on a une consigne d'effort fournie soit par un poste de commande 15 soit par un régulateur du couple soit par un régulateur de la vitesse du moteur. Ce même générateur de consigne 16 fournit en outre un signal représentatif de l'état de traction ou de freinage T/F de la machine.

Les signaux $\psi^*$ et $i^*$ sont introduits aux bornes d'entrée d'un diviseur 17 qui, en exploitant l'équation $|\psi| = L_m i \cos \xi$ (9) réalise l'opération

$$\frac{\psi^*}{L_m i^*}$$

pour obtenir comme signal de sortie $\cos \xi^*$. Ce signal est ensuite introduit à l'entrée d'un amplificateur opérationnel 18 qui après traitement fournit à sa borne de sortie le signal

$$\frac{1 - \cos \zeta^*}{2}$$

pour être transmis à l'entrée d'un inverseur programmable 19 qui, selon la configuration de traction ou de freinage T/F qui lui est communiquée par le générateur de consigne 16 l'affecte du signe + en traction ou du signe − en freinage avant de le transmettre. L'inverseur programmable 19 émet un signal $f(\xi^*)$ appelé ultérieurement signal de première approximation. Le signal $\psi^*$ sortant du générateur de consignes 16 est également présenté à l'entrée d'un amplificateur calculateur d'erreur 20 qui compare le signal $\psi^*$ avec la valeur sortant du calculateur d'état de la machine 9 et qui représente le flux réellement présent dans la machine 5. Le signal d'erreur sortant de l'amplificateur calculateur d'erreur 20 est transmis à l'entrée d'un inverseur 21 lui-même commandé par un inverseur logique 22 dont le rôle est de tenir compte de l'état de traction ou de freinage en inversant les signaux convenus. L'intervention de l'inverseur logique 22 sur l'inverseur 21 conforme donc ce dernier pour qu'il affecte le signal à transmettre d'un signe − en configuration de traction et d'un signe + en configuration de freinage. A la sortie de l'inverseur 21 le signal d'erreur affecté de son signe est ensuite transmis à un amplificateur 23 dont les caractéristiques de transfert sont à la fois proportionnelles et intégrales. L'amplificateur 23 fournit un signal sous forme d'une tension qui varie en fonction de l'écart constaté par l'amplificateur calculateur d'erreur 20 entre le flux demandé $\psi^*$ et le flux $|\psi|$ existant dans la machine. Le signal sortant de l'amplificateur 23 est appelé signal de correction $\eta$ et est transmis à un sommateur 24 par une de ses bornes d'entrée 24.1. Par l'autre borne d'entrée 24.2 le sommateur reçoit le signal de première approximation $f(\xi^*)$ transmis par l'inverseur programmable 19. Le rôle du sommateur 24 est de faire la somme du signal de correction $\eta$ et du signal de première approximation $f(\xi^*)$ pour fournir le signal de $f(\zeta^*)$ qui est transmis à la commande borne d'entrée 12.1 du comparateur 12.

La fonction $f(\xi^*)$ est appelé signal de première approximation car, en dehors des très basses vitesses, ce signal de commande ne permet pas, à lui seul, d'assurer une régulation suffisamment précise. En effet, lorsque le rotor du moteur tourne à basse vitesse, les temps de commutation sont, en valeurs relatives, très courts et on peut considérer qu'il n'y a pas de retard entre le moment où l'allumage du thyristor est commandé et celui où le courant s'établir réellement dans la phase correspondante du moteur. Dans ce cas, le vecteur courant $i$ et le vecteur d'allumage $\theta$ coïncident, les angles $\xi$ et $\zeta$ sont égaux et les fonctions $f(\xi^*)$ et $f(\zeta^*)$ sont identiques.

Par contre, au fur et à mesure que la vitesse du rotor s'élève, les temps de commutation deviennent, en valeurs relatives, de plus en plus longs et le retard entre l'ordre d'allumage et l'instant où le courant s'établit réellement dans la phase correspondante du moteur devient de plus en plus grand. Cela se traduit par un retard du vecteur courant $i$ sur le vecteur d'allumage de plus en plus important. Les angles $\xi$ et $\zeta$ deviennent très différents et la fonction $f(\xi^*)$ n'assure plus une régulation valable. Dans le schéma de la figure 3, l'amplificateur calculateur d'erreur 20, l'inverseur 21 et l'amplificateur 23 constitue la boucle de réaction fournissant le supplément de correction, sur base de la comparaison entre le flux désiré $\psi^*$ et le flux constaté $\psi$, sous forme d'un signal de correction $\eta$. Le signal de correction $\eta$ corrige également les éventuelles discordances entre le calcul et le fonctionnement réel du moteur.

Cette boucle de réaction tient compte du déphasage entre le vecteur courant $i$ et le vecteur d'allumage $\theta$, qui augmente avec l'accroissement de la vitesse, de la manière suivante. Lorsque le vecteur courant $i$ prend du retard sur le vecteur d'allumage $\theta$ (voir la figure 1). La composante magnétisante du courant, représentée par la projection du vecteur $i$ sur le vecteur $\psi$, augmente. Cette augmentation du courant magnétisant a pour conséquence d'augmenter le flux dans la machine avec le risque d'engendrer un échauffement excessif du moteur avec chute du rendement et, à vitesse élevée, des tensions excessives aux bornes du moteur.

Pour illustrer le mode de fonctionnement de la boucle de réaction imaginons un moteur en train d'accélérer après avoir reçu des consignes fixant les valeurs respectives du courant $i^*$ et du flux $\psi^*$. Au fur et à mesure que la vitesse augmente le vecteur courant $i$ prend du retard sur le vecteur d'allumage $\theta$ et tend à engendrer un accroissement du flux $\psi$. Or la valeur de flux $\psi$ est connue à tout instant par la mesure faite par l'unité de mesure 8 qui après transfert au calculateur d'état de la machine 9 est transmise à la borne d'entrée 20.1 de l'amplificateur calculateur d'erreur 20. Dans l'exemple traité, suite à un accroissement du flux mesuré $\psi$, l'amplificateur calculateur d'erreur 20 constate un écart négatif entre le flux imposé $\psi^*$ et le flux mesuré $\psi$. Par changement de signe dans le transfert de l'inverseur 21 le signal présenté à la borne

**0 119 374**

d'entrée de l'amplificateur 23 est positif et le signal de réaction η transféré par l'amplificateur 23 à la borne d'entrée 24.1 de l'amplificateur d'un sommateur 24 est également positif. Comme le signal de première approximation $f(\xi^*)$ présenté à la borne 24.2 de l'amplificateur sommateur 24 n'a pas changé puisque $i^*$ et $\psi^*$ restent constants, le nouveau signal $f(\zeta^*)=f(\xi^*)+\eta$ sera plus grand que le précédent. Un écart positif sera donc enregistré par le comparateur 12. Cela se traduira dans la boucle de verrouillage par une tension plus grande à la sortie du régulateur 13, une fréquence accrue à la sortie du convertisseur de tension en fréquence 14 et une fréquence de balayage plus grande des thyristors de l'onduleur 4 commandée par le décodeur 10. Cet accroissement de la vitesse de balayage va accroître l'angle $\zeta$ et par conséquent l'angle $\xi$ permettant ainsi à la projection de $i$ sur $\psi$ de reprendre sa valeur initiale et de réduire le flux $\psi$ à sa valeur souhaitée.

La figure 3 montre encore que le signal de sortie $i^*$ du générateur de consigne 16 est transmis à une borne d'entrée 25.1 d'un comparateur 25 dont le rôle est de constater l'écart avec un autre signal $i$ fourni à une seconde borne d'entrée 25.2 par un dispositif de mesure 26 inséré entre le redresseur 2 et l'onduleur 4 pour mesurer le courant injecté dans l'onduleur 4. L'écart mesuré par le comparateur 25 est transmis à un amplificateur 27 qui est lui-même relié à un déphaseur 28 contrôlant la tension continue de redresseur 2 pour adapter le courant mesuré $i$ à la valeur d'un courant commandé $i^*$. L'ensemble constitué par le comparateur 25, le dispositif de mesure 26, l'amplificateur 27 et le déphaseur 28 constitue la boucle de régulation de l'amplitude du courant.

Pour analyser le fonctionnement de l'ensemble du dispositif exposé à la figure 3 considérons qu'à l'instant initial $t_o$, la machine est en régime à vitesse moyenne et que par la suite l'opérateur va accélérer en demandant un couple plus grand.

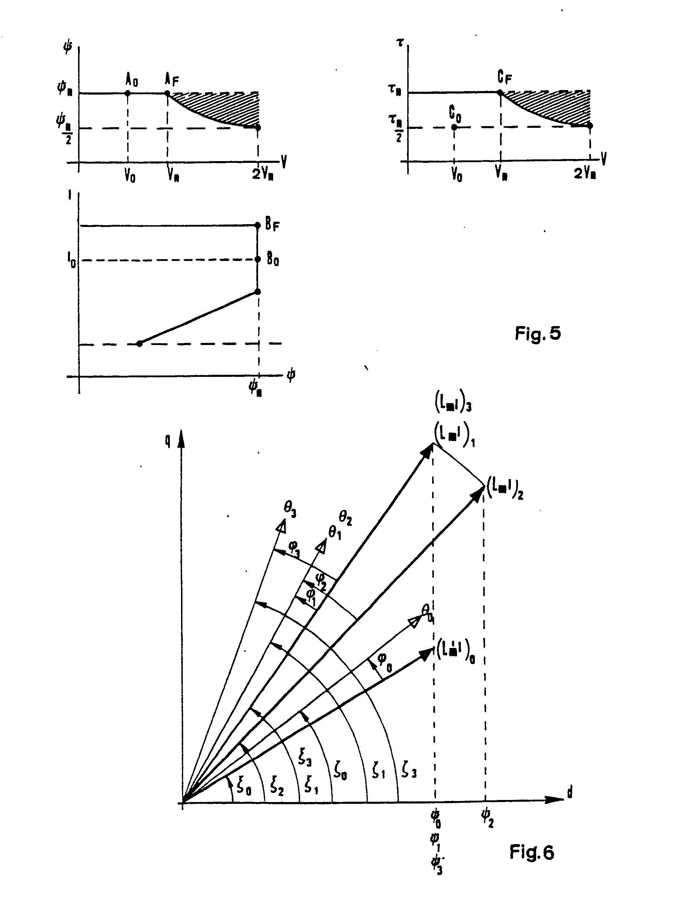

Pour préciser les conditions de départ les diagrammes de la figure 5 montrent respectivement:

— le point $A_o$ auquel correspond le flux nominal $\psi_n$ et la vitesse $V_o$ proche de la moitié de la vitesse nominal $V_n$.
— le point $B_o$ auquel correspond le flux nominal $\psi_n$ et le courant $i_o$.
— le point $C_o$ auquel correspond le couple $\tau_{n/2}$ égal à la moitié du couple nominal $\tau_n$ et la vitesse $V_o$ proche de la moitié de la vitesse nominale $V_n$.

Dans ces diagrammes de la figure 5 l'état final sera représenté par les points $A_F$, $B_F$, $C_F$. Pour suivre les différentes étapes intermédiaires, considérons dans la figure 6 le vecteur flux $\psi$, le vecteur courant $i$ et le vecteur d'allumage $\theta$ dans un système d'axes de référence $d$ et $q$ fixe par rapport aux champs tournants de la machine et pour lequel l'axe $d$ coïncide avec le vecteur flux $\psi$, l'axe $q$ étant orthogonal à l'axe $d$.

A l'instant initial $t_o$, la machine étant stabilisée l'équation (9) $\psi=L_m i \cos \xi$ donne

$\psi_o$: projection sur l'axe $d$ du vecteur $(L_m i)_o$
$\xi_o$: angle de déphasage entre le vecteur $\psi_o$ et $(L_m i)_o$
$\theta_o$: en avance sur le vecteur $(L_m i)_o$ puisque la machine tourne à une certaine vitesse
$\varphi_o$: angle de déphasage entre $\theta_o$ et $(L_m i)_o$
$\zeta_o$: angle de déphasage entre $\theta_o$ et $\psi_o$.

Dès que, au départ du poste de commande 15, l'opérateur demande un couple plus important, le générateur de consignes 16 transmet d'une part la valeur demandée du courant $i^*$ au diviseur 17 et au comparateur 25 et d'autre part la valeur demandée du flux $\psi^*$ au diviseur 17 et à l'amplificateur calculateur 20. En outre la configuration de traction est confirmée d'une part à l'inverseur programmable 19 qui maintient le signe + au signal de première approximation $f(\xi^*)$ et d'autre part à l'inverseur logique 22 qui transmet l'information à l'inverseur 21 pour maintenir le signe − dans la boucle de correction. Soit donc l'instant $t_1$ celui où l'opérateur demande une accélération de la machine en commandant un couple plus grand. Les signaux des sortie du générateur de consigne 16 de la figure 3 seront $\psi_1^*=\psi_0^*$ puisque nous travaillons à flux constant. $i_1^*>i_0^*$ sur base de l'équation (10). Le signal de sortie du diviseur 17 exprimée en fonction de l'équation (9) sous la forme

$$\cos \xi^* = \frac{\psi^*}{L_m i^*} \text{ sera } \cos \xi_1^* < \cos \xi_0^*$$

Après traitement l'amplificateur opérationel 18 fournit le signal

$$\frac{1-\cos \xi_1^*}{2} > \frac{1-\cos \xi_0^*}{2}$$

qu'il transmet à l'inverseur programmable 19 dont le signal de sortie est $f(\xi_1^*)>f(\xi_0^*)$ et, qui représentent le signal de première approximation, est adressé à la borne 24.2 de l'amplificateur sommateur 24. Le signal $\psi_1^*$, représentant le flux commandé, est également présenté à la borne d'entrée 20.2 de l'amplificateur calculateur d'erreur 20 pour être comparé avec le signal $|\psi|$ fourni par le calculateur d'état de la machine 9 à la borne 20.1 et représentant le flux dans l'entrefer du moteur asynchrone 5. Dans le calculateur d'erreur 20,

8

les signaux d'entrée n'ont pas subi de modification. En effet $\psi_1^*=\psi_0^*$ puisque la machine travaille à flux constant.

Notons d'autre part que les valeurs mesurées par l'unité de mesure 8 et transmises au calculateur d'état de la machine 9 pour le calcul de $|\psi|$ n'ont pas changé à cause de l'inertie magnétique de la machine 5.

Nous aurons donc $|\psi_1|=|\psi_0|$.

Le calculateur d'erreur 20 n'enregistre donc pas d'erreur. Il s'ensuit que le signal de correction $\eta$ sortant de l'amplificateur 23 n'a pas changé.

Nous aurons donc $\eta_1=\eta_0$ comme signal d'entrée à la borne 24.1 de l'amplificateur sommateur 24.

Remarquons que $\eta_0$ a une valeur finie mémorisée par la capacité réalisant l'intégration dans le temps de l'erreur précédemment constatée.

A la sortie de l'amplificateur 24 le signal $f(\zeta_1^*)=f(\xi_1^*)+\eta_1$ sera donc $f(\zeta_1^*)>f(\zeta_0^*)$. D'autre part, à cause de l'inertie de la boucle de verrouillage, la valeur moyenne de $f(\zeta)$ ne change pas nous aurons donc $f(\zeta_1)=f(\zeta_0)$ à la borne d'entrée 12.2 du comparateur 12 et $f(\zeta_1^*)>f(\zeta_0^*)$ à la borne d'entrée 12.1.

Le comparateur 12 fournit donc un signal d'erreur positif qu'il transmet au régulateur de phase 13. Ce régulateur de phase 13 fournit une tension plus élevée engendrant une fréquence plus grande à la sortie du convertisseur de tension en fréquence 14. Après mise en forme dans le décodeur 10, il s'ensuit une plus grande vitesse de balayage, commandée à l'onduleur 4 qui contribuera au déplacement du vecteur $\theta$ suivi par celui du vecteur $L_m i$.

Puisque $i_1^*>i_0^*$ nous aurons $(L_m i)_1>(L_m i)_0$ et comme le moteur 5 travaille à flux constant nous conservons $\psi_1=\psi_0$. Sur la figure 6 le vecteur $(L_m i)_1$ aura donc la même projection sur l'axe d que le vecteur $(L_m i)_0$.

En supposant que les temps de commutation des thyristors de l'onduleur 4 sont restés constants l'angle $\varphi$ donnant le déphasage entre le vecteur d'allumage $\theta$ et le vecteur courant $L_m i$ reste constant. Donc $\varphi_1=\varphi_0$ et la figure 6 peut se complèter en portant le vecteur $\theta_1$ avec $\zeta_1>\zeta_0$.

Mais au fur et à mesure que le temps s'écoule la machine augmente sa vitesse de plus en plus et à cette accélération correspond un temps de commutation des thyristors proportionnellement plus grand. Le déphasage entre le vecteur $\theta$ et le vecteur $L_m i$ grandit progressivement. Pour simplifier la description du comportement de la machine alimentée par onduleur et de son dispositif de contrôle, décomposons le processus en deux étapes que nous décrirons successivement, mais qui, en réalité, se chevauchent mutuellement.

La première étape décrira le comportement de la machine alimentée par onduleur en l'absence de réaction du dispositif de contrôle et la seconde étape celui du dispositif de contrôle. Dans la première étape, caractérisée par l'absence de réaction du circuit de contrôle, on peut imaginer qu'en fin de période d'accélération, que nous désignerons dans cette hypothèse par le temps $t_2$, la situation s'établirait comme suit: en l'absence de réaction, le vecteur d'allumage n'a pas modifié sa position; nous aurons donc $\theta_2=\theta_1$. Par contre, suite à l'accélération, le déphasage entre le vecteur d'allumage $\theta$ et le vecteur $L_m i$ a augmenté et se traduit par $\varphi_2>\varphi_1$ auquel correspond une nouvelle position en $(L_m i)_2$ dont la projection sur l'axe d donne un flux plus important $\psi_2>\psi_1$. Dans la seconde étape, décrivant la réaction du dispositif de contrôle, imaginons qu'en fin d'accélération, c'est-à-dire qu'au temps $t_2$, le dispositif de mesure 8 constate l'accroissement du flux de la machine 5. Après transmission des informations adéquates au calculateur d'état de la machine 9, nous obtenons, après traitement, à la borne de sortie 112 du calculateur d'état de la machine 9 un signal $|\psi|$ plus grand soit donc $|\psi_2|>|\psi_1|$ qui se présente à la borne d'entrée 20.1 de l'amplificateur calculateur d'erreur 20. Puisqu'à la borne d'entrée 20.2 l'autre signal est $\psi_2^*=\psi_1^*$ l'amplificateur calculateur d'erreur 20 constate que $\psi_2^*-|\psi_2|$ est négatif et transmet un signal négatif à l'inverseur 21. Celui-ci en modifie le signe et adresse donc un signal positif à l'amplificateur 23 qui fournit à son tour un signal de correction positif $\eta_2>\eta_1$ à la borne d'entrée 24.1 de l'amplificateur sommateur 24. Puisqu'à l'autre borne d'entrée 24.2 de l'amplificateur sommateur 24 le signal n'a pas changé $f(\xi_2^*)=f(\xi_1^*)$. Le signal de sortie de l'amplificateur sommateur 24 $f(\zeta_2^*)<f(\zeta_1^*)$ sera donc transmis à la borne d'entrée 12.1 du comparateur 12. Le comparateur 12 constate donc que l'écart $f(\zeta_2^*)-f(\zeta_2)$ est positif et la boucle de verrouillage va agir en augmentant la vitesse de balayage de l'onduleur 4 pour ramener progressivement le vecteur d'allumage $\theta$ à sa nouvelle position d'équilibre en $\theta_3$ et stabiliser le vecteur $(L_m i)$ en $(L_m i)_3$, d'ailleurs identique à $(L_m i)_1$. Ce nouveau régime stable est obtenu en fin de deuxième étape au temps $t_3$. En réalité dès qu'un accroissement de flux commence à se manifester dans l'entrefer de la machine 5 le dispositif de mesure 8 le constate et déclenche instantanément la réaction du dispositif de contrôle pour conserver le vecteur $L_m i$ à sa position représentée en $(L_m i)_1$. La figure 8 montre un diagramme relatif à une manoeuvre de freinage.

A l'instant $t_0$ supposons que la machine est en traction et en marche stabilisée. A l'instant $t_1$, l'opérateur commande le freinage en conservant les autres paramètres à leur valeur initiale, à savoir $i_1^*=i_0^*$ et $\psi_1^*=\psi_0^*$.

Dès que la manoeuvre est demandée depuis le poste de commande 15, le générateur de fonction 16 envoye le signal de freinage à la fois à l'inverseur programmable 19 et à l'inverseur logique 22.

L'inverseur programmable 19 affecte du signe − le signal de sortie de l'amplificateur opérationnel 18 pour fournir le signal de première approximation $f(\xi_1^*)=-f(\xi_0^*)$. Au moment du passage en freinage on peut supposer $\psi_0^*=|\psi_0|$ et donc que le signal d'erreur issu de l'amplificateur calculateur d'erreur 20 est égal à 0. Il s'ensuit que l'inversion introduite à l'inverseur 21 n'en modifie pas le signal d'entrée de l'amplificateur 23: d'où $\eta_1 = \eta_o$.

Le signal de sortie de l'amplificateur sommateur 24 $f(\zeta_1^*) = -f(\xi_o^*) + \eta_0$ sera transmis à la borne d'entrée 12.1 du comparateur 12.

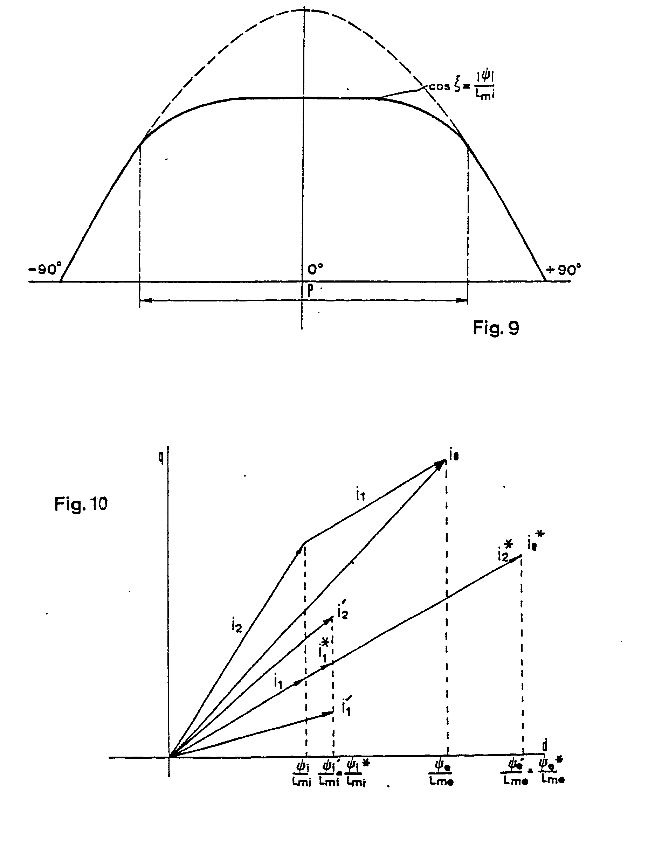

Pour préciser le rôle de l'inverseur programmable 19, supposons qu'un accroissement de flux par rapport à la valeur de consigne soit constaté par l'amplificateur calculateur d'erreur 20. A la figure 9, la courbe

$$\cos \xi = \frac{|\psi|}{L_m i},$$

déformée sur une plage P par saturation, montre que pour réduire le flux, il faut augmenter le valeur de l'angle $\xi$, si cet angle est positif, ce qui correspond à l'état de traction, tandis qu'il faut en réduire la valeur, si cet angle est négatif, ce qui correspond à l'état de freinage. Le rôle de l'inverseur programmable consiste à adapter la boucle de réaction à l'état de traction ou à celui de freinage.

En raison de l'inertie de la boucle de verrouillage, se présente à l'autre borne 12.2 du comparateur 12 le signal $f(\zeta_1) = f(\zeta_0)$. Le comparateur 12 enregistre donc un écart négatif qui, à travers la boucle de verrouillage impose une réduction de la vitesse de balayage de l'onduleur 4 jusqu'à ce que le vecteur $(L_m i)_1$ vienne occuper une position symétrique de celle de $(L_m i)_0$ par rapport à l'axe de référence.

Si nous supposons que les durées de commutation n'ont pas changé nous aurons dans la figure 8 $\varphi_1 = \varphi_0$ pour obtenir le positionnement du vecteur d'allumage $\theta_1$.

Le dispositif peut également intervenir pour contrôler la marche en parallèle de moteurs asynchrones propulsant un véhicule circulant sur voie ferrée par exemple. Supposons que le moteur 1, identique au moteur 2 par construction, soit directement contrôlé par le dispositif revendiqué et que le moteur 2 entraîne un essieu dont les roues sont légèrement plus grandes que celles de l'essieu entraîné par le moteur 1.

Il est évident qu'à base vitesse la différence du diamètre des roues ne se manifeste guère. Mais lorsque la vitesse augmente les écarts deviennent plus importants. La relation suivante

$$\Delta\omega = v\Delta[\frac{1}{r}] \tag{11}$$

avec

v: vitesse linéaire

$\Delta r$: écart en rayon

$\Delta\omega$: écart en vitesse angulaire

montre que le moteur 2 tourne moins vite que le moteur 1.

En conséquence, le glissement du moteur 2 est plus important que celui du moteur 1.

Les équations suivantes donnent les relations existant entre le moteur 1, le moteur 2 et la machine équivalente e. Les indices utilisés seront 1 pour le moteur 1, 2 pour le moteur 2, i pour l'un des moteurs 1 ou 2, e pour la machine équivalente

$$L_{me} = \frac{L_{mi}}{2} \tag{12}$$

avec

$L_m$: inductance mutuelle

$$R_{re} = \frac{R_{ri}}{2} \tag{13}$$

$R_r$: résistance rotorique

$$\omega_{re} = \frac{\omega_{r_1} + \omega_{r_2}}{2} \tag{14}$$

$\omega_r$: la fréquence de glissement

$$\psi_e = \psi_i \tag{15}$$

i: courant stator

$$i_e = i_1 + i_2 \tag{16}$$

$\tau$: couple

$$\tau_2 = \tau_1 + \tau_2 \tag{17}$$

$\psi$: flux

10

0 119 374

La figure 10 représente dans le système d'axes d et q le comportement du moteur 1, du moteur 2 et de la machine équivalente e.

Considérons d'abord la situation idéale dans laquelle les moteurs 1 et 2 sont identiques et entraînent des essieux identiques. Dans ce cas les deux vecteurs courant sont égaux et déphasés d'un même angle sur les vecteurs flux également égaux entre eux.

Dans la figure 10, cette situation idéale se traduit par les deux vecteurs $i_1^*$ et $i_2^*$ dont la somme vectorielle est représentée par $i_e^*$. Les projections des vecteurs courant sur l'axe de référence d définissent les flux correspondants. Nous aurons donc respectivement

$$\frac{\psi_e^*}{L_{me}}$$

pour le vecteur $i_e^*$ et

$$\frac{\psi_i^*}{L_{mi}}$$

pour chaque vecteur $i_1^*$ et $i_2^*$.

Dans l'exemple traité, le plus grand diamètre des roues de l'essieu entraîné par le moteur 2 engendre un glissement plus grand du moteur 2 qui va se répercuter par une réduction du flux à la fois dans le moteur 2 et dans le moteur 1 puisque dans la marche parallèle de ces moteurs leurs flux sont pratiquement égaux en module et en phase.

Cela se traduit sur la figure 10 par les vecteurs $i_1$ et $i_2$ dont la somme vectorielle est $i_e$ et dont les projections sur l'axe de référence d sont respectivement

$$\frac{\psi_i}{L_{mi}} \quad et \quad \frac{\psi_e}{L_{me}}.$$

En outre l'écart entre

$$\frac{\psi_i}{L_{mi}} \quad et \quad \frac{\psi_i^*}{L_{mi}}$$

est égal à la moitié de celui entre

$$\frac{\psi_e}{L_{me}} \quad et \quad \frac{\psi_e^*}{L_{me}}.$$

Puisque la réduction du flux dans le moteur 2 entraîne la même réduction de flux dans le moteur 1, il apparaît un écart dans le moteur 1 que le dispositif, repris en figure 3, constate par l'unité de mesure 8 et transmet au calculateur d'état de la machine 9. Après traitement les nouvelles valeurs de $|\psi|$ et $f(\zeta)$ sont respectivement transmises à l'amplificateur calculateur d'erreur 20 et au comparateur 12.

La valeur mesurée de flux $|\psi|$ est reçue à la borne d'entrée 20.1 de l'amplificateur calculateur d'erreur 20 qui, par comparaison avec la valeur consignée $\psi^*$ affichée à l'autre borne d'entrée 20.2, constate une erreur positive. Celle-ci est transmise à l'inverseur 21 qui en modifie le signe avant d'émettre son propre signal vers l'amplificateur intégrateur 23. A son tour l'amplificateur intégrateur 23 émet un signal de correction $\eta'$ de valeur plus petite que le précédent.

L'amplificateur sommateur 24 reçoit à la borne 24.2 un signal $f(\xi^*)$ inchangé et à la borne 24.1 un signal de correction $\eta'$ plus petit pour fournir à sa borne de sortie un signal $f(\zeta^*)'$ également plus petit que le précédent.

Il s'ensuit que le comparateur 12 constate un écart négatif qui à travers la boucle de verrouillage impose une réduction de la vitesse de balayage de façon à amener les vecteurs courant respectivement dans leur position $i_1'$ et $i_2'$ pour obtenir

$$\frac{\psi_i'}{L_{mi}} = \frac{\psi_i^*}{L_{mi}}.$$

La somme vectorielle des vecteurs $i_1'$ et $i_2'$ donne $i_e' = i_e^*$ dont la projection sur l'axe de référence d est

$$\frac{\psi_e'}{L_{me}} = \frac{\psi_e^*}{L_{me}}.$$

11

**0 119 374**

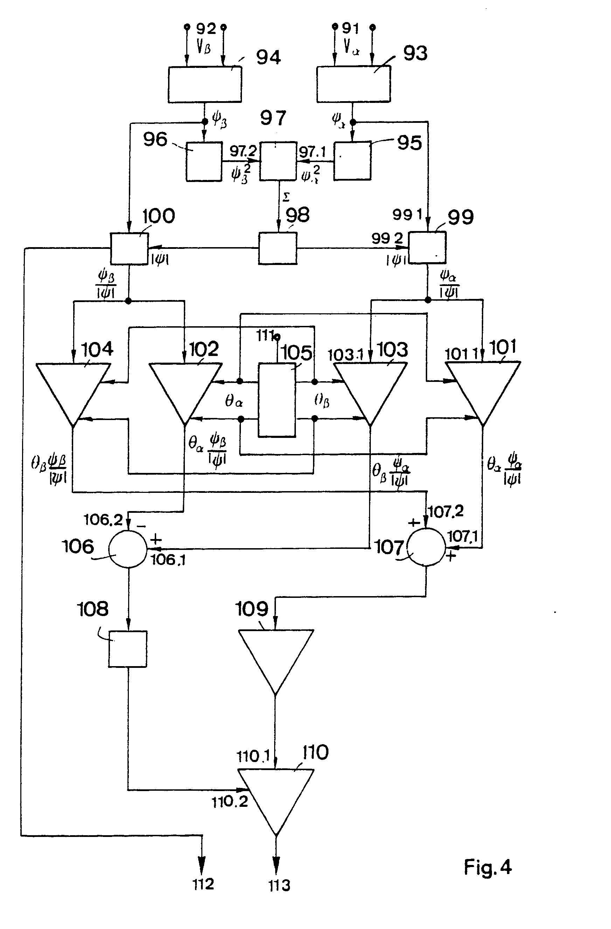

La figure 4 montre en détails un exemple de calculateur d'état de la machine 9. Une paire de bornes d'entrée 91 alimentées à la tension $V_\alpha$ représentant le projection sur l'axe α de la mesure faite par la bobine de détection placée selon l'axe de la première phase du moteur asynchrone 5 et mesurant une tension proportionnelle à la tension induite dans la première phase.

Une paire de bornes d'entrée 92 alimentée à la tension $V_\beta$ mesurée par la bobine de détection placée perpendiculairement à la première bobine de détection et donnant une tension proportionnelle à

$$\frac{u_{2e\ phase} - u_{3e\ phase}}{\sqrt{3}}$$

u: tension réduite.

Les signaux $V_\alpha$ et $V_\beta$ sont respectivement introduits dans les intégrateurs 93 et 94 qui fournissent les signaux de sortie $\psi_\alpha$ et $\psi_\beta$.

Par simplification, nous suivrons le traitement de $\psi_\alpha$, étant bien entendu que $\psi_\beta$ suit le même traitement dans une branche parallèle.

Le signal $\psi_\alpha$ est présenté simultanément à la borne d'entrée d'un multiplieur 95 et à une borne 99.1 d'un diviseur 99. Dans le multiplieur 95 $\psi_\alpha$ est élevé au carré pour être transmis à un sommateur 97 qui reçoit d'une part $\psi_\alpha^2$ à sa borne d'entrée 97.1 et d'autre part, à sa borne 97.2 le signal $\psi_\beta^2$ obtenu de façon analogue dans les unités 94 et 96.

Le sommateur 97 fait la somme des deux signaux reçus aux bornes d'entrée 97.1 et 97.2 et la transmet à un extracteur de racine carrée 98. Un nouveau signal $|\psi| = \sqrt{\psi_\alpha^2 + \psi_\beta^2}$ est alors transmis à une borne 99.2 du diviseur 99 qui après traitement fournit le signal

$$\frac{\psi_\alpha}{|\psi|}$$

et l'adresse à une entrée 101.1 d'un amplificateur programmable 101 et à une autre entrée 103.1 d'un autre amplificateur programmable 103. De la même manière le signal

$$\frac{\psi_\beta}{|\psi|}$$

a été obtenu dans un diviseur 100 pour être ensuite transmis aux amplificateurs programmables 102 et 104.

Les amplificateurs à gain programmable fonctionnent comme suit: la tension d'entrée

$$\frac{\psi_\alpha}{|\psi|} \quad ou \quad \frac{\psi_\beta}{|\psi|}$$

est amplifiée par un gain fonction de l'état des thyristors de l'onduleur ainsi, lorsque $Th_1$ et $Th_2$ sont allumés les tensions de sortie des amplificateurs 101, 102, 103 et 104 seront respectivement:

$$\theta_\beta \frac{\psi_\beta}{|\psi|} = \frac{1}{2} \frac{\psi_\beta}{|\psi|}$$

$$\theta_\alpha \frac{\psi_\alpha}{|\psi|} = \frac{\sqrt{3}}{2} \frac{J_\alpha}{|\psi|}$$

$$\theta_\alpha \frac{\psi_\beta}{|\psi|} = \frac{\sqrt{3}}{2} \frac{\psi_\beta}{|\psi|}$$

et

$$\theta_\beta \frac{\psi_\alpha}{|\psi|} = \frac{1}{2} \frac{\psi_\alpha}{|\psi|}$$

et à l'aide du tableau ci-après, on peut déterminer la valeur du gain des amplificateurs en fonction de la valeur des variables logiques contrôlant l'allumage des thyristors de l'onduleur. Comme le gain des amplificateurs prend quatre valeurs discrètes possibles également données dans le tableau ci-après, deux variables logiques suffisent à programmer complètement les amplificateurs. Ces variables de programmation sont obtenues à partir d'un circuit décodeur 105 à l'entrée duquel on trouve les variables de commande $Th_1$, $Th_2 \ldots Th_6$.

| Etat de comptage | Configuration de l'onduleur | $\theta_\alpha$ | $\theta_\beta$ |
|---|---|---|---|
| 1 | $Th_1$, $Th_2$ | $\sqrt{3/2}$ | $1/2$ |
| 2 | $Th_3$, $Th_2$ | $0$ | $1$ |
| 3 | $Th_3$, $Th_4$ | $-\sqrt{3/2}$ | $1/2$ |
| 4 | $Th_5$, $Th_4$ | $-\sqrt{3/2}$ | $-1/2$ |
| 5 | $Th_5$, $Th_6$ | $0$ | $-1$ |
| 6 | $Th_1$, $Th_6$ | $\sqrt{3/2}$ | $-1/2$ |

A la sortie de l'amplificateur programmable 101 on obtient le signal

$$\theta_\alpha \frac{\psi_\alpha}{|\psi|}$$

qui est transmis à la borne 107.1 d'un sommateur 107. De la même manière les signaux

$$\theta_\beta \frac{\psi_\alpha}{|\psi|}, \quad \theta_\alpha \frac{\psi_\beta}{|\psi|} \text{ et } \theta_\beta \frac{\psi_\beta}{|\psi|}$$

sont obtenus respectivement à la sortie des amplificateurs programmables 103, 102 et 104.
Les signaux

$$\theta_\alpha \frac{\psi_\alpha}{|\psi|} \quad \text{et } \theta_\beta \frac{\psi_\beta}{|\psi|}$$

sont respectivement présentés aux bornes 107.1 et 107.2 du sommateur 107 qui réalise

$$\zeta = \theta_\alpha \frac{\psi_\alpha}{|\psi|} + \theta_\beta \frac{\psi_\beta}{|\psi|}$$

De la même manière les signaux

$$\theta_\beta \frac{\psi_\alpha}{|\psi|} \quad \text{et } \theta_\alpha \frac{\psi_\beta}{|\psi|}$$

sont respectivement présentés aux bornes 106.1 et 106.2 d'un sommateur 106 qui réalise

$$\sin \zeta = \theta_\beta \frac{\psi_\alpha}{|\psi|} - \theta_\alpha \frac{\psi_\beta}{|\psi|}$$

Le signal représentant $\cos \zeta$ est ensuite transmis à un amplificateur opérationnel 109 qui réalise l'opération

$$\frac{1 - \cos \zeta}{2}$$

et transmet le résultat obtenu à un amplificateur à gain programmable 110.

Le signal de sortie du comparateur 106 est $\sin \zeta$ qui selon la position du vecteur d'allumage $\theta$ par rapport au vecteur $\psi$ peut avoir des valeurs positives ou négatives enregistrées par un comparateur 108.

Si le signal $\sin \zeta$ est positif le comparateur 108 introduit un signal dans l'amplificateur 110 pour affecter le signal d'un gain +1. Si au contraire sin $\zeta$ est négatif le comparateur 108 introduit un signal dans l'amplificateur 110 qui permet à celui-ci d'affecter le signal d'un gain $-1$. De la sorte on obtient à la borne de sortie 113 de l'amplificateur 110 un signal correspondant à $f(\zeta)$.

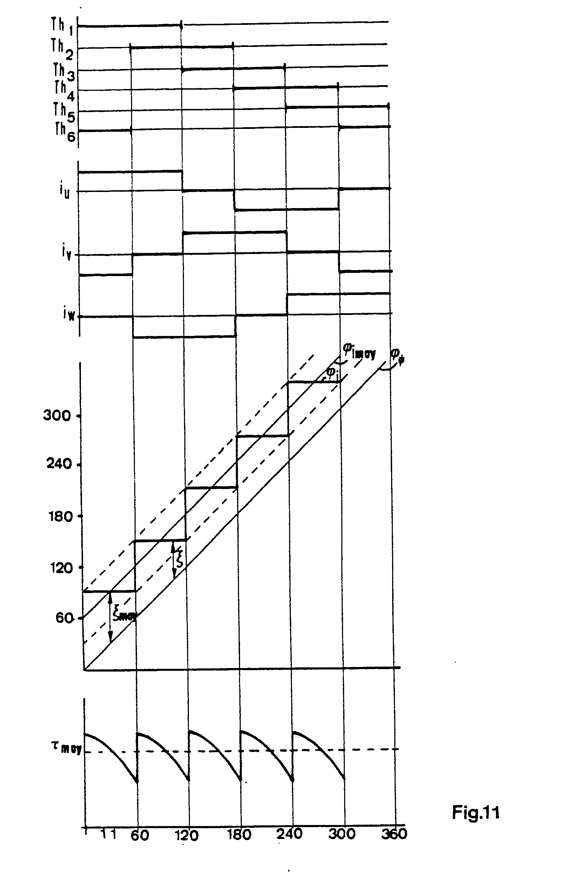

Le couple de la machine asynchrone alimentée en ondes pleines de courant (voir figure 11) présente des harmonique à des fréquences multiples de six fois la fréquence fondamentale. Ces harmoniques sont relativement importants pour les ordres inférieurs (1, 2, 3) et provoquent une fatigue anormale des organes de transmission mécaniques aux très basses vitesses.

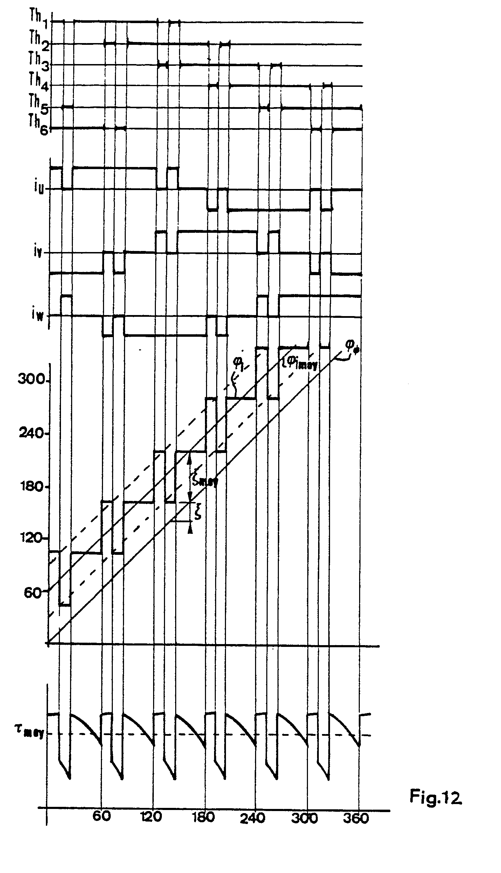

Pour rejeter ces couples pulsants vers des ordres supérieurs où ils sont moins gênants, une méthode connue consiste à injecter dans les phases du moteurs des ondes découpées de courant conformes à celles représentées à la figure 12. Ces ondes découpées de courant sont alors mémorisées dans des mémoires mortes dont le balayage, à une fréquence proportionnelle à la fréquence fondamentale de l'onduleur, produit des signaux d'allumage de thyristors comme représentés en figure 12.

Une méthode plus simple est mise en oeuvre dans le procédé faisant l'objet de l'invention. Cette méthode consiste à créer des ondes découpées de courant en modifiant un des paramètres de la boucle de verrouillage de phase (9, 12, 13, 14, 10).

Supposons que le moteur tourne à basse vitesse et qu'au temps $t_0$ le vecteur d'allumage $\theta$ progresse d'un bond de 60° pour commander l'allumage des thyristors $Th_1$ et $Th_2$ du convertisseur 4. Au temps $t_0$ l'angle $\zeta$, qui repère le déphasage entre le vecteur d'allumage $\theta$ et le vecteur flux $\psi$ augmente brusquement de 60°, de sorte qu'à l'entrée du comparateur 12 le signal de contrôle $f(\zeta)_{t=t_0}$ est plus grand que le signal de commande $f(\zeta^*)$. Le comparateur 12 transmet donc un signal d'erreur négatif ou régulateur de phase 13. Rappelons que le régulateur de phase 13 possède des caractéristiques de transfert à la fois proportionnelles et intégrales. En maintenant la caractéristique de transfert proportionnelle prépondérante par rapport à la caractéristique intégrale la tension de sortie du régulateur de phase 13 est également négative. Cette tension négative est ensuite intégrée dans le convertisseur de tension en fréquence 14 jusqu'à ce qu'un seuil $-V_{max}$ soit atteint au temps $t_1$. Dès cet instant un premier comparateur sensible à ce signal négatif remet l'intégrateur du convertisseur de tension en fréquence 14 à zéro et envoie un signal au compteur du décodeur 10 pour le programme en sens décroissant. Au temps $t_1$ le décodeur 10 ordonne donc au vecteur d'allumage de progresser d'un bond en arrière pour commander les thyristors $Th_1$ et $Th_6$. L'angle $\zeta$ diminue donc de 60° d'où le signal de contrôle $f(\zeta)_{t=t_1}$ est plus petit que le signal de commande $f(\zeta^*)$ et le comparateur 12 transmet un signal d'erreur positif au régulateur de phase 13. De ce fait la tension de sortie du régulateur de phase 13 devient positive et après intégration dans le convertisseur de tension en fréquence 14 elle atteint un seuil prédétermine $+V_{max}$ au temps $t_2$ et le second comparateur du ocnvertisseur de tension en fréquence 14 remet l'intégrateur à zéro et envoie un signal au compteur du décodeur 10 pour le programmer en sens croissant. Au temps $t_2$ le décodeur 10 ordonne donc le rallumage de $Th_1$ et $Th_2$ pour poursuivre le processus de découpage des ondes de courant.

Pour des caractéristiques bien définies du convertisseur de tension en fréquence 14, plus le gain du comparateur 12 et du régulateur de phase 13 est élevé et plus la fréquence des découpes de l'onde de courant est élevée et plus les couples pulsants sont rejetés vers des ordres plus élevés pour être moins gênants.

Lorsque les fréquences de balayage sont suffisamment élevées, on maintient le gain de la boucle de verrouillage (9, 12, 13, 14, 10) et la caractéristique proportionnelle de transfert du régulateur de phase 13 à des valeurs suffisamment faibles pour que la tension de sortie du régulateur de phase 13 reste à peu près constante et que l'onduleur de courant 4 fonctionne en ondes pleines.

Par contre au dessous d'un certain seuil de vitesse, on augmente le gain du comparateur 12 et celui de la caractéristique proportionnelle de transfert du régulateur de phase 13 de manière à alimenter la machine asynchrone 5 en ondes découpées de courant comme celle représentée à la figure 14.

Le bon fonctionnement de l'ensemble du système exige la présence de tensions induites $V_\alpha$ et $V_\beta$ à l'entrée du calculateur 9. Or lorsqu'au départ, le moteur est à l'arrêt, il n'y a pas des flux dans le moteur donc pas de tensions induites $V_\alpha$ et $V_\beta$. Il est alors nécessaire d'avoir une séquence spéciale pour le démarrage du moteur. Une méthode consiste à transformer le régulateur de phase 13 en générateur de signaux en forme de dents de scie qui fait évoluer linéairement la tension à l'entrée du convertiseur de tension en fréquence 14 et par l'intermédiaire du décodeur 10 fait varier proportionnellement la fréquence de l'onduleur 4 pour créer au sein du moteur une force magnétomotrice statorique dont la fréquence varie liniairement dans le temps. Au moment où la fréquence de cette force magnétomotrice est à peu près égale à celle du rotor du moteur, le flux augmente dans le moteur, à ce moment un comparateur non représenté détecte que l'intensité du flux $|\psi|$ a dépassé un seuil prédéterminé et met l'ensemble de la boucle 12, 13, 14, ou 10, 9 en service.

## Revendications

1. Procédé de commande d'une ou de plusieurs machines alternatives (5) alimentées par un ensemble convertisseur constitué d'au moins un convertisseur de fréquence (4), le dispositif comprenant:

— une boucle de régulation (25, 26, 27, 28) de l'amplitude du courant;

— un dispositif de mesure (8) pour repérer le vecteur du flux d'entrefer ($\psi$);

14

— une boucle de régulation de la phase d'un vecteur d'allumage (θ) des thyristors de l'onduleur (4) commandant le moment d'allumage des thyristors et réagissant à une consigne (f(ξ*)) représentative du déphasage désiré entre le vecteur du courant (i) et le vecteur du flux d'entrefer (ψ) de la machine, cette consigne étant modifiée par une boucle de réaction (20, 21, 23, 24) pour tenir compte du déphasage entre le vecteur d'allumage (θ) et le vecteur du courant (i);

caractérisé en ce que la dite consigne (f(ξ*)) représentative du déphasage désiré entre le vecteur du courant (i) et le vecteur du flux d'entrefer (ψ) est combinée avec un signal de correction (η) émanant d'un régulateur (23) d'amplitude du flux d'entrefer pour donner un signal de commande (f(ζ*)).

2. Dispositif de commande appliquant le procédé de commande selon la revendication précédente, caractérisé en ce que des moyens contrôlant de déphasage entre le vecteur d'allumage (θ) et le vecteur flux d'entrefer (ψ), appelés boucle de verrouillage de phase (9, 12, 13, 14, 10), comportent une première unité de calcul, appelé calculateur d'état de la machine (9), calculant, sur base des mesures transmises par un dispositif de mesure (8), la valeur instantanée d'une fonction d'angle (f(ζ)), appelé signal de contrôle et établissant une relation angulaire du déphasage entre le vecteur d'allumage (θ) et le vecteur flux d'entrefer (ψ) et une deuxième unité de réglage (12, 13, 14, 10) qui, alimentée à la fois par le signal de contrôle (f(ζ)) issu du calculateur d'état de la machine (9) et par un signal de commande (f(ζ*)) obtenu dans un amplificateur sommateur (24) par sommation d'un premier terme fourni par une unité de traitement (17, 18, 19) appelé signal de première approximation (f(ξ*)) et d'un second terme appelé signal de correction (η), obtenu à la sortie d'une boucle de réaction (20, 21, 23), fournit les signaux d'allumage des thyristors du convertisseur de fréquence (4).

3. Dispositif de commande selon la revendication 2, caractérisé en ce que l'unité de réglage de la boucle de verrouillage de phase comporte un comparateur (12), un régulateur de phase (13), un convertisseur de tension en fréquence (14) et un décodeur (10) dont les signaux de sortie sont transmis d'un part au calculateur d'état de la machine (9) par les bornes d'entrée (111) et d'autre part aux circuits d'allumage des thyristors du convertisseur (4) par l'intermédiaire d'un bus de commande (11).

4. Dispositif de commande selon les revendications 2 et 3, caractérisé en ce que le calculateur d'état de la machine (9) fournit à une de ses bornes de sortie (113) une fonction (f(ζ)) caractéristique de l'angle (ζ) donnant le déphasage entre le vecteur d'allumage (θ) et le vecteur flux (ψ), exprimée par les composantes vectorielles rapportées au stator de la machine, et couvrant de manière univoque la zone des déphasages possibles entre ces deux vecteurs, en tenant compte du déphasage dû à la durée non nulle du transfert de courant.

5. Dispositif de commande selon la revendication 4, caractérisé en ce que la fonction f(ζ) égale au signe du sin ζ multiplié par

$$\frac{1-\cos \zeta}{2}$$

est générée dans le calculateur d'état (9) partir de signaux alternatifs $V_\alpha$ et $V_\beta$ où $V_\alpha$ représente la projection sur l'axe α, coïncidant avec l'axe magnétique de la première phase, de la mesure faite par la bobine de détection placée selon l'axe de la première phase du moteur asynchrone (5) et mesurant une tension proportionnelle à la tension induite dans la première phase, et où $V_\beta$ représente la projection sur l'axe β, orthogonal à l'axe α, de la mesure faite par la bobine de détection placée perpendiculairement à la première bobine de détection et donnant une tension proportionnelle à

$$\frac{U_{2e\ phase}-U_{3e\ phase}}{\sqrt{3}}$$

relevés à l'aide d'un dispositif de mesure (8), qui sont transformés en $\psi_\alpha$ et $\psi_\beta$, où $\psi_\alpha$ et $\psi_\beta$ représentent respectivement les projection sur les axes α et β du flux dans l'entrefer, par des intégrateurs (93 et 94) puis en

$$\frac{\psi_\alpha}{|\psi|} \quad et \quad \frac{\psi_\beta}{|\psi|}$$

par traitements successifs dans des multiplicateurs (95 et 96), un sommateur (97), un extracteur de racine carrée (98) et des diviseurs (99 et 100), les signaux

$$\frac{\psi_\alpha}{|\psi|} \quad et \quad \frac{\psi_\beta}{|\psi|}$$

adressés respectivement à des amplificateurs programmables (101, 103) et (102, 104) dont la valeur du gain est fonction des variables logiques de programmation de l'allumage des thyristors de l'onduleur obtenues à partir d'un circuit décodeur (105) pour fournir des tensions de sortie

$$\theta_\alpha \frac{\psi_\alpha}{|\psi|} \; , \; \theta_\beta \frac{\psi_\alpha}{|\psi|} \; , \; \theta_\alpha \frac{\psi_\beta}{|\psi|} \; \text{et} \; \theta_\beta \frac{\psi_\beta}{|\psi|}, \; \theta_\alpha \; \text{et} \; \theta_\beta$$

étant les projections sur les axes α et β du vecteur d'allumage (θ) représentatif de l'ordre d'allumage donné à une paire de thyristors de l'onduleur, et pour ensuite former

$$\cos \zeta = \theta_\alpha \frac{\psi_\alpha}{|\psi|} + \theta_\beta \frac{\psi_\beta}{|\psi|}$$

$$\sin \zeta = \theta_\beta \frac{\psi_\alpha}{|\psi|} - \theta_\alpha \frac{\psi_\beta}{|\psi|}$$

à l'aide des sommateurs (106 et 107), le signal cos ζ est ensuite transmis à un amplificateur opérationnel (109) qui transmet le résultat de l'opération à un amplificateur à gain programmable (110) alors que le signal sin ζ est transmis à un comparateur (108) qui introduit, selon la position du vecteur d'allumage (θ) par rapport au vecteur flux d'entrefer (ψ), une valeur positive ou négative dans l'amplificateur à gain programmable (110).

6. Dispositif de commande selon les revendications 2 à 5, caractérisé en ce que une unité de traitement fournissant le signal de première approximation (f(ξ*)) est composée d'un diviseur (17) alimenté par les signaux de consigne du courant (i*) et du flux d'entrefer (ψ*), d'un amplificateur opérationnel (18) et d'un inverseur programmable (19) alimenté à la fois par les signaux de l'amplificateur opérationnel (18) et par un signal représentatif de l'état de traction ou de freinage (T/F) issu du générateur de consignes (16).

7. Dispositif de commande selon les revendications 2 à 6, caractérisé en ce que la boucle de réaction comprend un amplificateur comparateur (20), recevant à une borne d'entrée (20.1) un signal dérivé fourni par le calculateur d'état de la machine (9) et représentant la valeur absolue instantanée du flux d'entrefer (ψ) dans la machine (5), et à une autre borne d'entrée (20.2) la valeur consignée du flux d'entrefer (ψ*) fournie par un générateur de consignes (16), la dite boucle de réaction comprend encore un inverseur (21) alimenté à la fois par l'amplificateur comparateur (20) et par un inverseur logique (22) commandé à son tour par le signal représentatif de l'état de traction ou de freinage (T/F) fourni par le générateur de consignes (16), et un amplificateur (23) fournissant le signal de correction (η).

8. Dispositif de commande selon les revendications 2 à 7, caractérisé en ce qu'un poste de commande (15) transmet les ordres au générateur de consignes (16) qui fournit les signaux de consigne du courant (i*), de consigne du flux d'entrefer (ψ*) et le signal représentatif de l'état de traction ou de freinage (T/F) à l'unité de traitement (17, 18, 19), le signal de consigne du flux d'entrefer (ψ*) et le signal représentatif de l'état de traction ou de freinage (T/F) à la boucle de réaction (20—23) et le signal de consigne du courant (i*) à une borne (25.1) d'un comparateur (25), dont une autre borne (25.2) reçoit la valeur du courant mesuré (i) par un dispositif de mesure (26) et dont le signal de sortie est adressé à un amplificateur (27) qui à son tour commande la valeur de la tension continue du convertisseur (2).

**Patentansprüche**

1. Verfahren zur Steuerung einer oder mehrerer Wechselstrommaschinen (5), die von einer Wandlereinheit aus mindestens einem Frequenzwandler (4) versorgt werden, wobei die Vorrichtung umfaßt:

— eine Schleife (25, 26, 27, 28) zur Regelung der Amplitude des Stroms;
— eine Meßvorrichtung (8) zur Messung des Vektors des Luftspalt-Flusses (ψ);
— eine Schleife zur Regelung der Phase eines Zündvektors (θ) der Thyristoren des Wechselrichters (4), die den Zündzeitpunkt der Thyristoren bestimmt und auf einen Sollwert (f(ξ*)) anspricht, der repräsentativ für die gewünschte Phasenverschiebung zwischen dem Vektor des Stroms (i) und dem Vektor des Luftspalt-Flusses (ψ) der Maschine ist, wobei dieser Sollwert durch eine Rückwirkungsschleife (20, 21, 23, 24) verändert wird, um die Phasenverschiebung zwischen dem Zündvektor (θ) und dem Vektor des Stroms (i) zu berücksichtigen;

dadurch gekennzeichnet, daß der besagte Sollwert (f(ξ*)), der repräsentativ für die gewünschte Phasenverschiebung zwischen dem Vektor des Stroms (i) und dem Vektor des Luftspalt-Flusses (ψ) ist, mit einem Korrektursignal (η) kombiniert wird, das von einem Luftspaltflußamplituden-Regler (23) geliefert wird, wobei ein Steuersignal (f(ζ*)) erhalten wird.

2. Steuervorrichtung zur Anwendung des Steuerverfahrens gemäß dem vorhergehenden Anspruch,

**0 119 374**

dadurch gekennzeichnet, daß die Mittel zur Regelung der Phasenverschiebung zwischen dem Zündvektor (θ) und dem Luftspaltflußvektor (ψ), die Phasenverriegelungsschleife (9, 12, 13, 14, 10) genannt werden, eine erste Recheneinheit aufweisen, die Maschinenzustands-Rechner (9) genannt wird, une die, auf der Grundlage der von einer Meßvorrichtung (8) übermittelten Meßwerte, den Momentanwert einer Winkelfunktion (f(ζ)) berechnet, die Regelsignal genannt wird, und eine Winkelbeziehung für die Phasenverschiebung zwischen dem Zündvektor (θ) und dem Luftspaltvektor (ψ) aufstellt, und außerdem eine zweite Einstelleinheit (12, 13, 14, 10) aufweisen, die, während sie zugleich das Regelsignal (f(ζ)) von dem Maschinenzustandsrechner (9) und ein Steuersignal (f(ζ*)) von einem Summator-Verstärker (24) erhält, wobei dieses Steuersignal durch Summierung eines ersten, von einer Verarbeitungseinheit (17, 18, 19) kommenden, Signal erster Näherung (f(ξ*)) genannten Ausdrucks, und eines zweiten, Korrektursignal (η) genannten, am Ausgang einer Rückwirkungsschleife (20, 21, 23) erhaltenen Ausdrucks gewonnen wird, die Signale für die Zündung der Thyristoren des Frequenzwandlers (4) liefert.

3. Steuervorrichtung gemäß Anspruch 2, dadurch gekennzeichnet, daß die Phasenverriegelungsschleifen-Einstelleinheit aus einem Komparator (12), einem Phasenregler (13), einem Spannungs/ Frequenz-Wandler (14) und einem Decodierer (10) besteht, wobei die Ausgangssignale dieses Decodierers (10) einerseits über die Eingangsklemmen (111) nach dem Maschinenzustandsrechner (9), und andererseits über eine Steuerleitung (11) nach den Zündkreisen der Thyristoren des Wandlers (4) übertragen werden.

4. Steuervorrichtung gemäß Anspruch 2 und 3, dadurch gekennzeichnet, daß der Maschinenzustands-rechner (9) an einer seiner Ausgangsklemmen (113) eine Funktion (f(ζ)) liefert, die charakteristisch für den Winkel (ζ) ist, der die Phasenverschiebung zwischen dem Zündvektor (θ) und dem Flußvektor (ψ) angibt, und die durch die auf den Stator Maschine bezogenen, vektoriellen Komponenten ausgedrückt wird, und auf eindeutige Weise die Zone der möglichen Phasenverschiebungen zwischen diesen zwei Vektoren überdeckt, wobei die Phasenverschiebung berücksichtigt wird, die auf die von Null verschiedene Dauer des Stromtransfers zurückzuführen ist.

5. Steuervorrichtung gemäß Anspruch 4, dadurch gekennzeichnet, daß die Funktion f(ζ), die gleich dem Vorzeichen von sin ζ, multipliziert mit

$$\frac{1-\cos \zeta}{2}$$

ist, in dem Maschinenzustands-Rechner (9) aus mit Hilfe einer Meßvorrichtung (8) gewonnenen Wechselstromsignalen $V_\alpha$ und $V_\beta$ erzeugt wird—wobei $V_\alpha$ die Projektion auf die mit der magnetischen Achse der ersten Phase zusammenfallende Achse α des Meßwertes darstellt, der von der Meßspule bestimmt wird, die in Richtung der Achse der ersten Phase des asynchronen Motors (5) angeordnet ist und eine zu der in der ersten Phase induzierten Spannung proportionale Spannung mißt, und wobei $V_\beta$ die Projektion auf die zu der Achse α orthogonalen Achse β des Meßwertes darstellt, der von der Meßspule bestimmt wird, die senkrecht zu der ersten Meßspule angeordnet ist und eine zu

$$\frac{U_{2.Phase}-U_{3.Phase}}{\sqrt{3}}$$

proportionale Spannung mißt—die durch Integratoren (93 und 94) in Signale $\psi_\alpha$ und $\psi_\beta$ umgewandelt werden—wobei $\psi_\alpha$ und $\psi_\beta$ die Projektionen auf die Achsen α und β des Flusses in dem Luftspalt darstellen—die durch aufeinanderfolgende Verarbeitung in Multipliziereinheiten (95 und 96), einem Summator (97), einer Quadratwurzel-Radiziereinheit (98) und Teilern (99 und 100) in Signale

$$\frac{\psi_\alpha}{|\psi|} \text{ und } \frac{\psi_\beta}{|\psi|}$$

umgewandelt werden, die auf programmierbare Verstärker (101, 103) beziehungsweise (102, 104) gegeben werden, deren Verstärkung von den logischen Variablen zur Programmierung der Zündung der Thyristoren des Wechselrichters abhängig ist, die von einer Decodierschaltung (105) geliefert werden, wobei Ausgangsspannungen

$$\theta_\alpha\frac{\psi_\alpha}{|\psi|} \text{ , } \theta_\beta\frac{\psi_\alpha}{|\psi|} \text{ , } \theta_\alpha\frac{\psi_\beta}{|\psi|}$$

und

$$\text{und } \theta_\beta\frac{\psi_\beta}{|\psi|}$$

17

erhalten werden—bei denen $\theta_\alpha$ und $\theta_\beta$ die Projektionen auf die Achsen $\alpha$ und $\beta$ des Zündvektors ($\theta$) sind, der für einen einem Thyristor-Paar des Wechselrichters erteilten Zündbefehl repräsentativ ist, und wobei danach mit Hilfe der Summatoren (106 und 107) die Funktionen

$$\cos \zeta = \theta_\alpha \frac{\psi_\alpha}{|\psi|} + \theta_\beta \frac{\psi_\beta}{|\psi|}$$

und

$$\sin \zeta = \theta_\beta \frac{\psi_\alpha}{|\psi|} - \theta_\alpha \frac{\psi_\beta}{|\psi|}$$

gebildet werden, und das Signal $\cos \zeta$ nach einem Operationsverstärker (109) übertragen wird, der das Ergebnis der Rechenoperation nach einem Verstärker mit programmierbarer Verstärkung (110) überträgt, während das Signal $\sin \zeta$ nach einem Komparator (108) übertragen wird, der je nach der Position des Zündvektors ($\theta$) bezüglich des Luftspaltflußvektors ($\psi$) einen positiven oder negativen Wert in den Verstärker mit programmierbarer Verstärkung (110) eingibt.

6. Steuervorrichtung gemäß den Ansprüchen 2 bis 5, dadurch gekennzeichnet, daß eine Verarbeitungseinheit, die das Signal erster Näherung ($f(\xi^*)$) liefert, gebildet wird von einem Teiler (17), der Sollwertsignale für den Strom (i*) und den Luftspaltfluß ($\psi^*$) erhält, einem Operationsverstärker (18), und von einem programmierbaren Inverter (19), der zugleich das Signal des Operationsverstärkers (18) und ein für den Antriebs- oder Bremszustand repräsentatives Signal (T/F) erhält, wobei dieses letztere Signal von dem Sollwertgenerator (16) geliefert wird.

7. Steuervorrichtung gemäß den Ansprüchen 2 bis 6, dadurch gekennzeichnet, daß die Rückwirkungsschleife gebildet wird von einem Komparator-Verstärker (20), der an einer Eingangsklemme (20.1) ein abgeleitetes Signal erhält, das von dem Maschinenzustands-Rechner (9) geliefert wird und den absoluten Momentanwert des Luftspaltflusses ($\psi$) in der Maschine (5) repräsentiert, und an einer anderen Eingangsklemme (20.2) den Sollwert für den Luftspaltfluß ($\psi^*$) erhält, der von einem Sollwertgenerator (16) geliefert wird; und außerdem gebildet wird von einem Inverter (21), der zugleich von dem Komparator-Verstärker (20) und einem logischen Inverter (22) ein Signal erhält, wobei dieser logische Inverter (22) wiederum von dem für den Antriebs- oder Bremszustand repräsentativen Signal (T/F) gesteuert wird, das von dem Sollwertgenerator (16) geliefert wird; sowie von einem Verstärker (23), der das Korrektursignal ($\eta$) liefert.

8. Steuervorrichtung gemäß den Ansprüchen 2 bis 7, dadurch gekennzeichnet, daß eine Steuerstation (15) die Befehle nach dem Sollwertgenerator (16) überträgt, der den Sollwert für den Strom (i*), den Sollwert für den Luftspaltfluß ($\psi^*$) und das für den Antriebs- oder Bremszustand repräsentative Signal (T/F) nach der Verarbeitungseinheit (17, 18, 19), den Sollwert für den Luftspaltfluß ($\psi^*$) und das für den Antriebs- oder Bremszustand repräsentative Signal (T/F) nach der Rückwirkungsschleife (20—23), und den Sollwert für den Strom (i*) nach einer Klemme (25.1) eines Komparators (25) weiterleitet, wobei eine andere Klemme (25.2) dieses Komparators (25) den von einer Meßvorrichtung (26) gemessenen Meßwert für den Strom (i) erhält, und das Ausgangssignal dieses Komparators (25) auf einem Verstärker (27) gegeben wird, der wiederum die Größe der Gleichspannung des Wandlers (2) steuert.

**Claims**

1. Method of controlling one or more alternating-current machines (5) supplied by a converter group constituted by at least one frequency converter (4), the device comprising:

— a control loop (25, 26, 27, 28) for the current amplitude;
— a measuring device (8) for finding the vector of the air gap flux ($\psi$);
— a control loop for the phase of a firing vector ($\theta$) of the thyristors of the inverter (4) controlling the instant of firing of the thyristors and reacting to a reference signal ($f(\xi^*)$) representative of the desired phase shift between the current vector (i) and the air gap flux vector ($\psi$) of the machine, this reference signal being modified by a reaction loop (20, 21, 23, 24) for taking into account the phase shift between the firing vector ($\theta$) and the current vector (i);

characterised in that the said reference signal ($f(\xi^*)$) representative of the phase shift which is desired between the current vector (i) and the air gap flux vector ($\psi$) is combined with a correction signal ($\eta$) emanating from an air gap flux amplitude controller (23) for giving an operation signal ($f(\zeta^*)$).

2. Control device using the control method according to the preceding claim, characterised in that the means controlling the phase shift between the firing vector ($\theta$) and the air gap flux vector ($\psi$), which are referred to as a phase locking loop (9, 12, 13, 14, 10), comprise a first computing unit referred to as a machine state computer (9) computing, on the basis of measurements transmitted by a measuring device (8), the instantaneous value of an angle function ($f(\zeta)$), referred to as a control signal and establishing an angular relation of the phase shift between the firing vector ($\theta$) and the air gap flux vector ($\psi$) and a second control unit (12, 13, 14, 10) which, supplied both by the control signal (f($\zeta$)) issuing from the machine state computer (9) and by an operation signal (f($\zeta^*$)) obtained in a summing amplifier (24) by summation of a first term provided by a treatment unit (17, 18, 19) referred to as a first approximation signal (f($\xi^*$)) and a second term referred to as a correction signal ($\eta$) obtained at the output of a reaction loop (20, 21, 23), provides the firing signals of the thyristors of the frequency converter (4).

3. Control device according to claim 2, characterised in that the control unit of the phase locking loop comprises a comparator (12), a phase regulator (13), a voltage-to-frequency converter (14), and a decoder (10) whose output signals are transmitted on the one hand to the machine state computer (9) by the input terminals (111) and on the other hand to the firing circuits of the thyristors of the converter (4) by way of an operating bus (11).

4. Control device according to claims 2 and 3, characterised in that the machine state computer (9) provides at one of its output terminals (113) a function (f($\zeta$)) characteristic of the angle ($\zeta$) giving the phase shift between the firing vector ($\theta$) and the flux vector ($\psi$), expressed by the vectorial components referred to the stator of the machine and covering unequivocally the zone of possible phase shifts between these two vectors, taking into account the phase shift due to the non-zero duration of current transfer.

5. Control device according to claim 4, characterised in that the function f($\zeta$) equal to the sign of sin $\zeta$ multiplied by

$$\frac{1-\cos \zeta}{2}$$

is generated in the state computer (9) from alternating signals $V_\alpha$ and $V_\beta$, where $V_\alpha$ represents the projection on the axis $\alpha$, coinciding with the magnetic axis of the first phase, of the measurement made by the detection coil situation on the axis of the first phase of the synchronous motor (5) and measuring a voltage proportional to the voltage induced in the first phase, and where $V_\beta$ represents the projection on the axis $\beta$, at right angles to the axis $\alpha$, of the measurement made by the detection coil situated perpendicularly to the first detection coil and giving a voltage proportional to

$$\frac{U_{2nd\ phase}-U_{3rd\ phase}}{\sqrt{3}}$$

these being taken by means of a measuring device (8) and transformed into $\psi_\alpha$ and $\psi_\beta$, where $\psi_\alpha$ and $\psi_\beta$ represent respectively the projections on the axis $\alpha$ and $\beta$ of the flux in the air gap, by integrators (93 and 94), then into

$$\frac{\psi_\alpha}{|\psi|} \text{ and } \frac{\psi_\beta}{|\psi|}$$

by successive treatments in multipliers (95 and 96), summing element (97), a square root extractor (98) and dividers (99 and 100), the signals

$$\frac{\psi_\alpha}{|\psi|} \text{ and } \frac{\psi_\beta}{|\psi|}$$

addressed respectively to programmable amplifiers (101, 103) and (102, 104) the gain value whereof is a function of the programming logic variables of the firing of the thyristors of the inverter which are obtained from a decoder circuit (105) to provide output voltages

$$\theta_\alpha\frac{\psi_\alpha}{|\psi|} \ , \ \theta_\beta \frac{\psi_\alpha}{|\psi|} \ , \ \theta_\alpha \frac{\psi_\beta}{|\psi|} \text{ and } \theta_\beta\frac{\psi_\beta}{|\psi|}, \ \theta_\alpha \text{ and } \theta_\beta$$

being the projections on the axis $\alpha$ and $\beta$ of the firing vector ($\theta$) representative of the order of firing given to a pair of thyristors of the inverter, and then to form

$$\cos \ \zeta=\theta_\alpha \frac{\psi_\alpha}{|\psi|} +\theta_\beta \frac{\psi_\beta}{|\psi|}$$

$$\sin \ \zeta=\theta_\beta \frac{\psi_\alpha}{|\psi|} -\theta_\alpha \frac{\psi_\beta}{|\psi|}$$

by means of the summing elements (106 and 107), the signal cos $\zeta$ is then transmitted to an operational amplifier (109) which transmits the result of the operation to a programmable gain amplifier (110) whereas the signal sin $\zeta$ is transmitted to a comparator (108) which, according to the position of the firing vector ($\theta$) with respect to the air gap flux vector ($\psi$), introduces a positive or negative value into the programmable gain amplifier (110).

6. Control device according to claims 2 to 5, characterised in that a treatment unit providing the first approximation signal (f($\xi$*)) comprises a divider (17) supplied with the reference signals of the current (i*) and of the air gap flux ($\psi$*), an operational amplifier (18), and a programmable inversion element (19) supplied both with the signals of the operational amplifier (18) and also with a signal representing the traction or braking state (T/F) issued by the reference signal generator (16).

7. Control device according to claims 2 to 6, characterised in that the reaction loop comprises a comparator amplifier (20), receiving at one input terminal (20.1) a derivative signal supplied by the machine state computer (9) and representing the instantaneous absolute value of the air gap flux ($\psi$) in the machine (5), and at another input terminal (20.2) the desired value of the air gap flux ($\psi$*) supplied by a reference signal generator (16), and said reaction loop also comprises an inversion element (21) supplied both by the comparator amplifier (20) and by a logic inversion element (22) controlled in its turn by the signal representing the traction or braking state (T/F) supplied by the reference signal generator (16), and an amplifier (23) which provides the correction signal ($\eta$).

8. Control device according to claims 2 to 7, characterised in that a control station (15) transmits the orders to the reference signal generator (16) which supplies the current reference signals (i*), the air gap flux reference signals ($\psi$*) and the signal representing the traction or braking state (T/F) to the treatment unit (17, 18, 19), the air gap flux reference signal ($\psi$*) and the signal representing the traction or braking state (T/F) to the reaction loop (20—23) and the current reference signal (i*) to a terminal (25.1) of a comparator (25) another terminal (25.2) of which receives the value of the measured current (i) from a measuring element (26) and whose output signal is sent to an amplifier (27) which itself controls the value of the direct voltage of the converter (2).

Fig. 1

Fig. 2

1

Fig. 3

Fig. 4

Fig. 5

Fig. 6

0 119 374

Fig.7

Fig.8

5

Fig. 9

Fig. 10

Fig.11

Fig.12